# EUROPEAN PATENT SPECIFICATION

(11) **EP 3 410 676 B1**
(45) Date of publication and mention of the grant of the patent: **04.08.2021**
(21) Application number: 17744138.3
(22) Date of filing: 23.01.2017
(51) Int. Cl.: H04N 7/14, H04N 7/15, H04M 1/00, G06F 13/00, H04M 3/42, H04L 12/58, H04L 29/06, H04M 1/26, G06F 9/451

(54) **COMMUNICATION TERMINAL, COMMUNICATION SYSTEM, DISPLAY CONTROL METHOD, AND PROGRAM**
KOMMUNIKATIONSENDGERÄT, KOMMUNIKATIONSSYSTEM, ANZEIGESTEUERUNGSVERFAHREN UND PROGRAMM
TERMINAL DE COMMUNICATION, SYSTÈME DE COMMUNICATION, PROCÉDÉ DE COMMANDE D'AFFICHAGE, ET PROGRAMME

(30) Priority: 29.01.2016 JP 2016015752
(43) Date of publication of application: 05.12.2018
(73) Proprietor: Ricoh Company, Ltd., Tokyo 143-8555 (JP)
(72) Inventor: HASEGAWA, Takashi, Tokyo 143-8555 (JP); NAKAFUJI, Atsushi, Tokyo 143-8555 (JP); MATSUNO, Yoichiro, Tokyo 143-8555 (JP); MORITA, Kenichiro, Tokyo 143-8555 (JP)
(74) Representative: SSM Sandmair
(86) International application number: PCT/JP2017/002143
(87) International publication number: WO 2017/130908

(56) References cited:
- JP-A- 2005 236 670
- JP-A- 2011 239 109
- US-A1- 2006 120 307
- US-A1- 2006 126 601
- US-A1- 2008 275 955
- US-A1- 2015 148 015

## Description

### [Technical Field]

The present invention relates to a communication terminal, a communication system, a display control method, and a program.

### [Background Art]

In recent years, in accordance with demand for reducing travel cost and time, a communication system that provides calling and conferencing over a communication network such as the Internet, a dedicated line, or the like has become popular. In order to cause a calling source to determine whether a destination candidate is ready to contact, some of such communication systems implement presence indication functions, for example, by using protocols such as SIMPLE (Session initiation protocol for Instant Messaging and Presence Leveraging Extensions).

Patent document 1 discloses an integrated presence management system that includes multiple application servers; a terminal that includes a memory storing multiple application client programs that correspond to the application servers, respectively; and a presence server that includes a memory storing presence information of the terminal.

According to Patent document 1, in the case of receiving from the terminal a registration of presence information of the terminal related to one of the applications, the presence server causes the presence information of the terminal related to at least one of the other applications that belongs to the same group as the one of the applications, to synchronize with the one of the applications.

In the case of starting communication with one of the destination candidates having a specific attribute among destination candidates, even if a communication terminal displays respective states of the destination candidates, it is difficult to cause a user to determine which one of the destination candidates having the specific attribute is ready to start communication. For this reason, a problem arises in the usability of the communication terminal.

US 2006/120307 A1 describes that a videophone interpretation system accepts a call from a caller terminal and refers an interpreter registration table to extract the terminal number of an interpreter capable of interpreting between the language of a caller and the language of a callee and connects the caller terminal, a callee terminal and an interpreter terminal. The videophone interpretation system includes a function to communicate video and audio necessary for interpretation between the terminals. The audio of an interpreter is transmitted either to the caller or callee, which is specified by the interpreter terminal. The audio of the conversation partner is suppressed or interrupted when the audio of the interpreter is detected by an audio synthesizer, thereby providing a quick and precise interpretation service.

US 2015/148015 A1 describes a apparatus, system, and method of managing candidate counterpart terminal information, each of which determines, in response to a request for adding a candidate counterpart terminal to a candidate list of a request sender terminal, whether attribute information stored in association with the request sender terminal matches attribute information stored in association with the candidate counterpart terminal to be added, and stores counterpart terminal identification information that identifies the candidate counterpart terminal in association with terminal identification information of the request sender terminal to update the candidate list of the specific request sender terminal when a determination result indicates that the attribute information match.

### SUMMARY OF THE INVENTION

The invention is defined by the subject-matter of the independent claims. The dependent claims are directed to advantageous embodiments.

### [Brief Description of Drawings]

FIG. 1 is a schematic diagram of a communication system according to an embodiment;
FIG. 2 is an external view of a terminal according to an embodiment;
FIG. 3A is a block diagram illustrating a hardware configuration of a terminal 10 according to an embodiment;
FIG. 3B is a block diagram illustrating a hardware configuration of a terminal 70 according to an embodiment;
FIG. 4 is a block diagram illustrating a hardware configuration of a management system according to an embodiment;
FIG. 5A is a block diagram illustrating a software configuration of a terminal 10 according to an embodiment;
FIG. 5B is a block diagram illustrating a software configuration of a terminal 70 according to an embodiment;
FIG. 6 is a block diagram illustrating functions of a terminal and a management system that constitute a part of a communication system according to an embodiment;
FIG. 7A is a schematic view illustrating a destination management table managed by a terminal 70;
FIG. 7B is a schematic view illustrating presence management table managed by a terminal 70;
FIG. 7C is a schematic view illustrating an authentication management table managed by a management system;
FIG. 7D is a schematic view illustrating the terminal management table managed by a management system;
FIG. 8 is a sequence chart illustrating a process in which terminals log in to a management system;
FIG. 9 is a diagram illustrating an example of a reception screen;
FIG. 10 is a sequence chart illustrating a process of transmitting presence information;
FIG. 11 is a flowchart illustrating a process of managing presence for each attribute;
FIG. 12 is a sequence chart illustrating a process of starting communication;
FIG. 13 is a diagram illustrating an example of an attribute list;
FIG. 14 is an example of a message displayed on a display;
FIG. 15 is an example of a display of an attribute list; and
FIG. 16 is an example of a screen for receiving selection of sound input and output devices.

### [Description of embodiments]

In the following, by using the drawings, an embodiment of the present invention will be described in detail.

### <<Overall configuration of communication system 1>

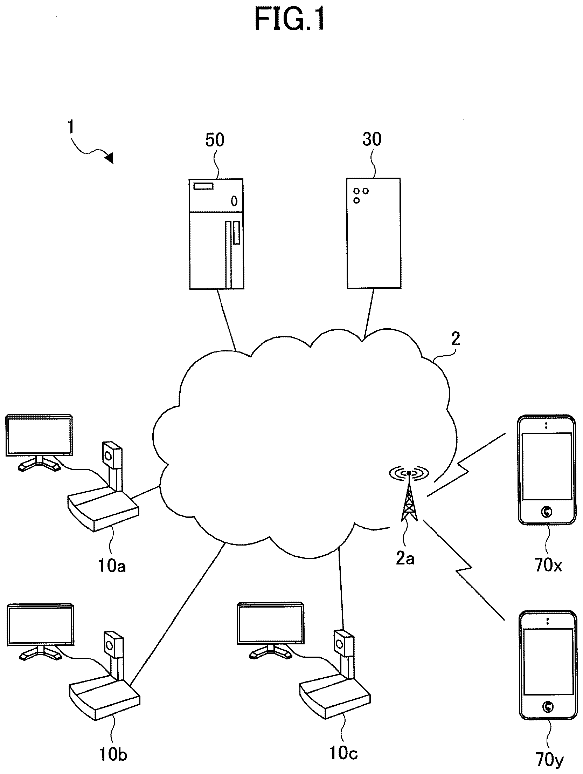

FIG. 1 is a schematic diagram of a communication system according to an embodiment of the present invention. As illustrated in FIG. 1, the communication system 1 is constituted with multiple communication terminals 10a, 10b, and 10c, which are, for example, video-conference terminals; multiple communication terminals 70x and 70y, which are, for example, smart phones; a communication management system 50 to manage the communication terminals; and a relay device 30. In the following, a "communication terminal" may be referred to as a "terminal" and a "communication management system" may be referred to as a "management system".

Although FIG. 1 illustrates the three terminals 10a, 10b, and 10c and the two terminals 70x and 70y, the number of terminals is not limited as such. Also, any one of the multiple terminals 70x and 70y may be referred to as the "terminal 70", and any one of the multiple terminals 10a, 10b, and 10c may be referred to as the "terminal 10". The terminals 10 and 70 may be general-purpose computers, electronic whiteboards, car navigation terminals, electronic signboards (digital signage), or the like that have a communication function.

The management system 50 is a computer equipped with a server function. The terminals 10 and 70 are computers equipped with corresponding client functions. The terminals 10 and 70, the relay device 30, and the management system 50 can communicate with each other through a communication network 2, which may be constituted with the Internet, a cellular phone network, a LAN (Local Area Network), a WiFi (Wireless Fidelity) network, a Bluetooth (registered trademark) network, and the like. The communication network 2 also includes a base station 2a at an end of a cellular phone network. It should be noted that although only one base station 2a is illustrated in FIG. 1, the number is not limited as such.

The relay device 30 relays content data including sound data, video (image) data, text data, and the like between the terminals 10 and 70.

The terminal 10 is placed in a call center, which is an example of a site, and the terminal 70 is placed at the front of a hotel, which is an example of a site. The management system 50, the relay device 30, and the terminals 10 and 70 are placed in the same country or area, or may be placed in different countries or areas. The user of the terminal 10 is, for example, an operator, and the user of the terminal 70 is, for example, a customer. It should be noted that the terminal 10 is an example of a destination terminal as a destination candidate.

### <<Hardware configuration in embodiment>>

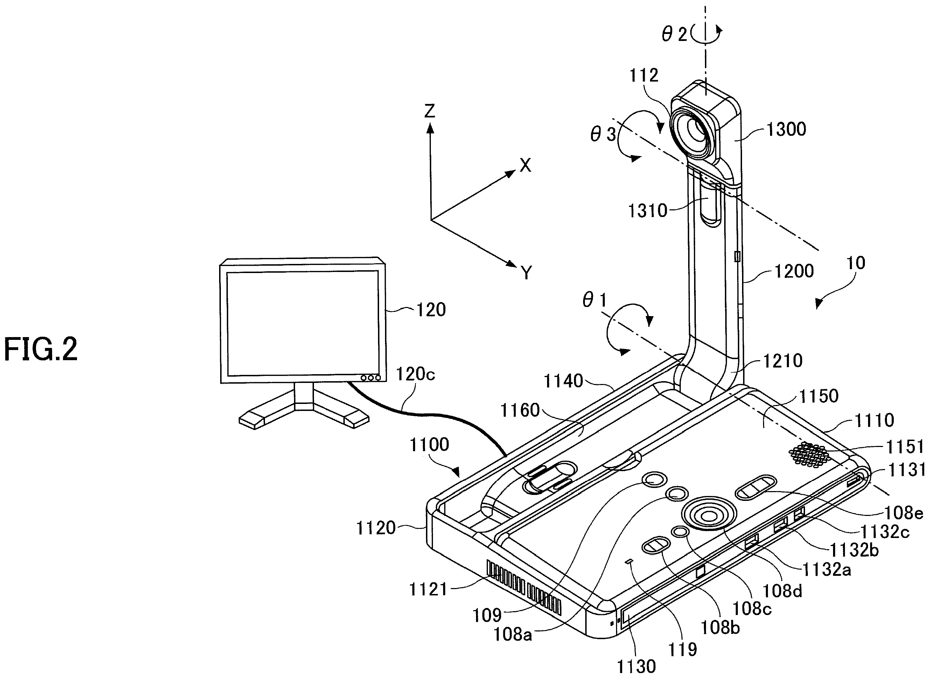

Next, a hardware configuration of the present embodiment will be described. FIG. 2 is an external view of a terminal 10 according to an embodiment. As illustrated in FIG. 2, the terminal 10 includes a housing 1100, an arm 1200, and a camera housing 1300. In a front wall 1110 of the housing 1100, there is an air intake surface formed with a plurality of air intake holes, and in a rear wall 1120 of the housing 1100, there is an air exhaust surface 1121 formed with a plurality of air exhaust holes. With the above arrangement, by driving a cooling fan embedded in the housing 1100, it becomes possible to take in the air in the rear of the terminal 10 through the air intake surface, and to exhaust the air to the rear of the terminal 10 through the air exhaust surface 1121. Through a sound pickup hole 1131 formed on a right side wall 1130 of the housing 1100, a built-in microphone 114, which will be described later, can pick up sounds such as a voice, noise, hum, and the like.

On the right wall 1130 side of the housing 1100, an operation panel 1150 is formed. In the operation panel 1150, there are a plurality of operation buttons (108a through 108e), a power supply switch 109, and an alarm lamp 119, which will be described later. Further, a sound output surface 1151 is formed in the operation panel 1150, which is formed by a plurality of sound output holes used for passing output sound from a built-in speaker 115, which will be described later. Further, on a part of the housing 1100 close to the left wall 1140, a housing unit 1160 is formed as a concave portion for housing the arm 1200 and the camera housing 1300. On the right wall 1130 of the housing 1100, a plurality of connection ports (1132a through 1132c) are formed for electrically connecting cables for an external device connection I/F 118, which will be described later. On the other hand, on the left wall 1140 of the housing 1100, a connection port is formed for electrically connecting a cable 120c of a display 120 for a display I/F 117.

It should be noted that in the following, an arbitrary operation button of the operation buttons (108a through 108e) will be described as an "operation button 108", and an arbitrary connection port of the connection ports (1132a through 1132c) will be described as a "connection port 1132".

Next, the arm 1200 is attached to the housing 1100 via a torque hinge 1210, and is capable of rotating in an up-and-down direction within a range of tilt angle θ1 of 135 degrees with respect to the housing 1100. FIG. 2 illustrates a state in which the tilt angle is 90 degrees. In the camera housing 1300, there is a built-in camera 112, which will be described later, and is capable of taking images of a user, a document, a room, and the like. Further, in the camera housing 1300, a torque hinge 1310 is formed. Further, the camera housing 1300 is attached to the arm 1200 via the torque hinge 1310. The camera housing 1300 is capable of rotating in a right-and-left direction within a range of +/-180 degrees of an angle θ2, and rotating in an up-and-down direction within a range of +/-45 degrees of a tilt angle θ3, with respect to the arm 1200, assuming that FIG. 2 illustrates a state in which θ2 and θ3 are zero degrees.

It should be noted that the external view in FIG. 2 is merely an example, and the present embodiment is not limited to this appearance. It should be noted that description of appearance is omitted for the terminal 70, the relay device 30, and the management system 50 because these have the same appearance as a generic smart phone or a server computer.

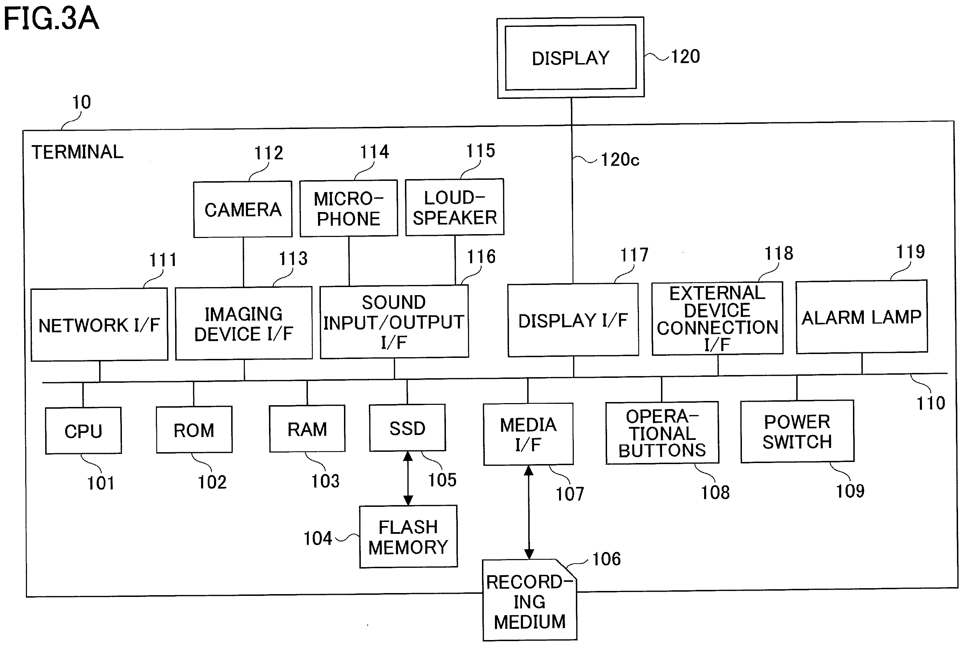

FIG. 3A is a hardware configuration of a terminal 10 according to an embodiment. The terminal 10 includes a central processing unit (CPU) 101 for controlling overall operations of the terminal 10; a read-only memory (ROM) 102 in which programs used for driving the CPU 101 such as an initial program loader are stored; a random access memory (RAM) 103 that is used for a work area of the CPU 101; a flash memory 104 in which programs for the terminal 10, and various data items including image data, audio data, and the like, are stored; a solid state drive (SSD) 105 that controls writing and reading various data items to and from the flash memory 104 according to the control of the CPU 101; a media interface (I/F) 107 that controls writing and reading data to and from a recording medium 106 including a flash memory, an integrated circuit (IC) card, and the like; the operation buttons 108 operated for, for example, selecting a destination of the terminal 10; the power supply switch 109 for switching ON/OFF the power supply of the terminal 10; and a network interface (I/F) 111 for performing data transmission by utilizing the communication network 2.

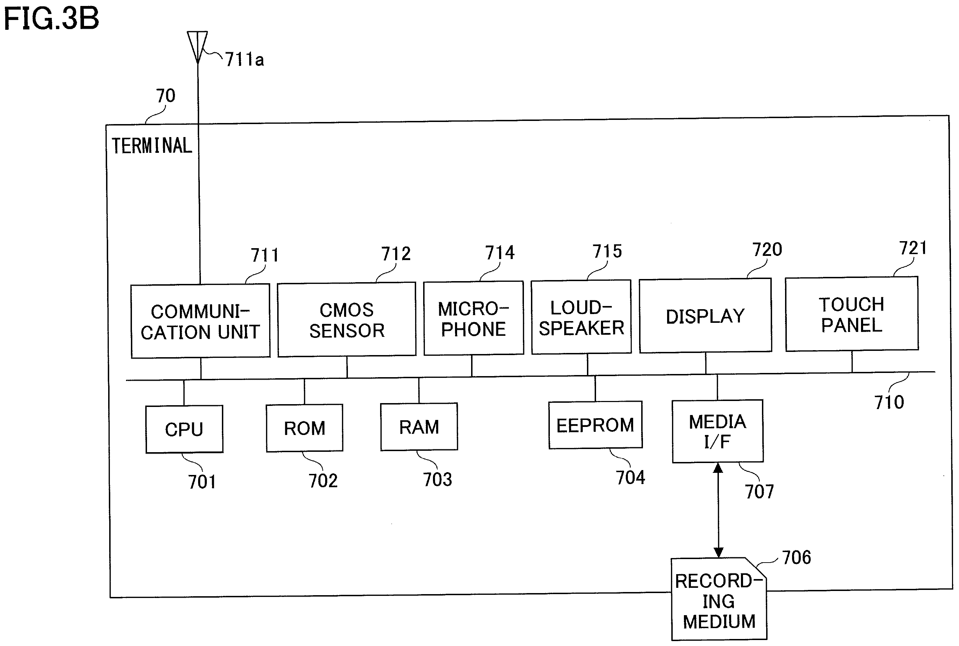

Further, the terminal 10 includes the built-in camera 112 that captures image data by taking an image of a subject according to the control of the CPU 101; an imaging element I/F 113 that controls driving the camera 112; the built-in microphone 114 for inputting sound; the built-in speaker 115 for outputting sound; a sound input/output I/F 116 for processing input/output of an audio signal between the microphone 114 and the speaker 115 according to the control of the CPU 101; the display I/F 117 for transmitting image data to the external display 120 according to the control of the CPU 101; the external device connection I/F 118 for connecting various external devices; the alarm lamp 119 for indicating an error of various functions of the terminal 10; and a bus line 110 such as an address bus, a data bus, and the like, for electrically connecting the above elements as illustrated in FIG. 3.

The display 120 is a display unit used for displaying a subject image or the like. Examples of the display 120 include a liquid crystal and an organic electroluminescence (EL) panel. Further, the display 120 is connected to the display I/F 117 via the cable 120c. The cable 120c may be a cable for an analog RGB (VGA) signal, a cable for a component video, or a cable for a signal of High-Definition Multimedia Interface (HDMI) (registered trademark) or Digital Video Interactive (DVI).

The camera 112 includes a lens and a solid-state image sensing device to convert light into electric charge for computerizing the subject image, and as the solid-state image sensing device, a Complementary Metal Oxide Semiconductor (CMOS), a Charge Coupled Device (CCD), or the like, is used.

To the external device connection I/F 118, via a Universal Serial Bus (USB) cable or the like, which is inserted into the connection port 1132 of the housing 1100, external devices such as an external camera, an external microphone, and an external speaker can be electrically connected. In the case where the external camera is connected, according to the control of the CPU 101, the external camera is driven. Similarly, in the case where an external microphone is connected or an external speaker is connected, according to the control of the CPU 101, the external microphone or the external speaker is driven.

It should be noted that the recording medium 106 can be easily attached or detached with the terminal 10. Further, as a non-volatile memory to/from that data are written/read according to the control of the CPU 101, an Electrically Erasable and Programmable ROM (EEPROM) may be used, not limited to the flash memory 104.

FIG. 3B is a block diagram illustrating a hardware configuration of the terminal 70. As illustrated in FIG. 3B, the terminal 70 includes a CPU 701 to control operations of the terminal 70 as a whole; a ROM (Read-Only Memory) 702 to store programs; a RAM 703 used as a work area of the CPU 701; an EEPROM (Electrically Erasable and Programmable ROM) 704 on which data read and write are executed according to the control of the CPU 701; a media I/F 707 to control data read and write (storing) on a recording medium 706 such as a flash memory or the like; and a CMOS (Complementary Metal Oxide Semiconductor) sensor 712 to capture a photographic subject according to the control of the CPU 701.

It should be noted that the EEPROM 704 stores various data items including an operating system (OS) executed by the CPU 701 and other programs. Also, the CMOS sensor 712 is a charge-coupled device that converts light into electric charge to computerize an image of a photographic subject. The CMOS sensor may be replaced with a CCD (Charge Coupled Device) sensor as long as a photographic subject can be captured.

The terminal 70 further includes a microphone 714 to convert a sound into a sound signal; a speaker 715 to convert a sound signal into a sound; an antenna 711a; a communicator 711 to communicate with a nearby base station 2a by a wireless communication signal by using the antenna 711a; a display 720 of liquid crystal, organic EL, or the like to display images of photographic subjects, various icons, and the like; a touch panel 721 that is installed on this display 720, and constituted with a pressure-sensitive or electrostatic panel, to detect a touch position on the display 720 touched with a finger, a touch pen, or the like; and a bus line 710 such as an address bus, a data bus, etc., for electrically connecting the above elements.

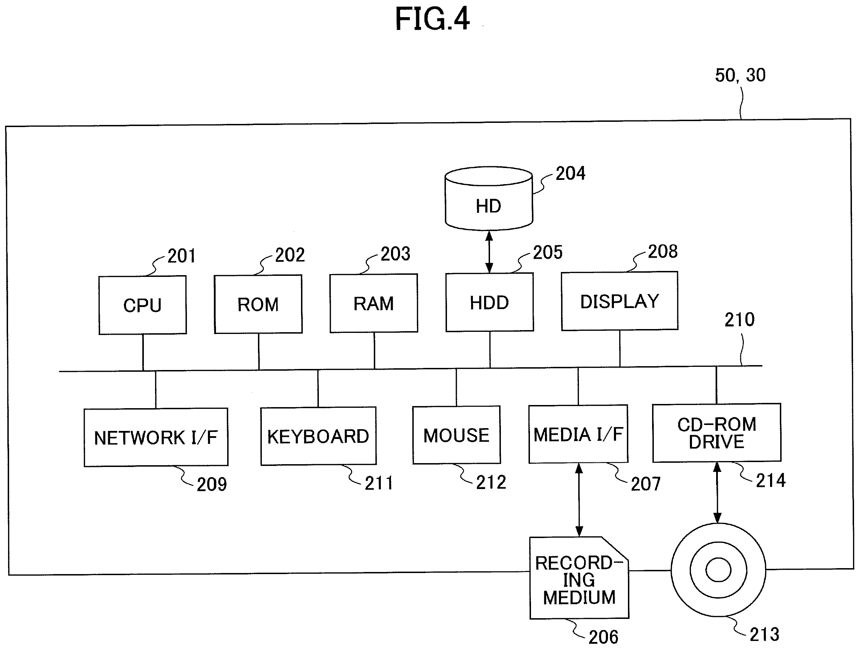

FIG. 4 is a hardware configuration diagram of a management system 50 according to an embodiment. The management system 50 includes a CPU 201 for controlling overall operations of the management system 50; a ROM 202 in which programs used for driving the CPU 201 such as an IPL are stored; a RAM 203 that is used for a work area of the CPU 201; an HD 204 for storing various data items including programs for the management system 50, and the like; a hard disk drive (HDD) 205 for controlling various data reading and data writing of the HD 204 according to the control of the CPU 201; a medium I/F 207 for controlling data reading and data writing (storage) of a recording medium 206 including a flash memory; a display 208 for displaying various information items including a cursor, a menu, a window, a character, or an image; a network I/F 209 for performing data communication by using the communication network 2; a keyboard 211 including a plurality of keys for inputting characters, numerical values, various instructions, and the like; a mouse 212 for selecting and executing various instructions, selecting an object to be processed, moving the cursor, and the like; a compact disc read-only memory (CD-ROM) drive 214 for controlling various data reading of a CD-ROM 213 as an example of a detachable recording medium; and a bus line 210 such as an address bus, a data bus, and the like, for electrically connecting the above elements as illustrated in FIG. 4.

The relay apparatus 30 has a similar hardware configuration as the above management system 50, and thus, the descriptions will be omitted.

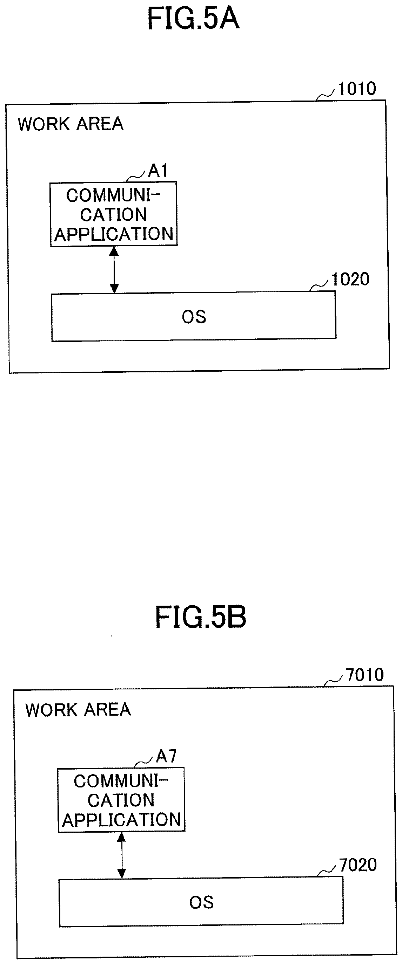

In the following, an application may be referred to as an "appli". FIG. 5A is a block diagram illustrating a software configuration of the terminal 10 according to an embodiment. The terminal 10 has a "communication application A1" installed as a client application. As illustrated in FIG. 5A, an OS 1020 and a communication application A1 run on a work area 1010 in the RAM 103 of the terminal 10. Among these, the OS 1020 is basic software that provides basic functions to manage the terminal 70 as a whole. The communication application A1 is an application for communicating with the other terminals. It should be noted that the communication application A1 and the OS 1020 are installed in each of the terminals 10 that constitutes the communication system 1 in the present embodiment.

FIG. 5B is a block diagram illustrating a software configuration of the terminal 70 according to an embodiment. The terminal 70 has a "communication application A7" installed as a client application. As illustrated in FIG. 5B, an OS 7020 and the communication application A7 run on a work area 7010 in the RAM 703. Among these, the OS 7020 is basic software that provides basic functions to manage the terminal 70 as a whole. The communication application A7 is an application for communicating with the other terminals. It should be noted that the communication application A7 and the OS 7020 are installed in each of the terminals 70 that constitutes the communication system 1 in the present embodiment.

It should be noted that as the communication protocol of the communication applications A1 and A7, the following protocols may be listed: (1) SIP (Session Initiation Protocol); (2) H.323; (3) a protocol that enhances SIP; (4) a protocol of Instant Messenger; (5) a protocol using MESSAGE method of SIP; (6) a protocol of Internet Relay Chat (IRC); and (7) a protocol that enhances the protocol of Instant Messenger. Among these, (4) a protocol of Instant Messenger is a protocol used in, for example, (4-1) XMPP (Extensible Messaging and Presence Protocol); or (4-2) ICQ (registered trademark), AIM (registered trademark), Skype (registered trademark), and the like. Also, (7) a protocol that enhances the protocol of Instant Messenger is, for example, Jingle.

### <<Functional configuration of embodiment>>

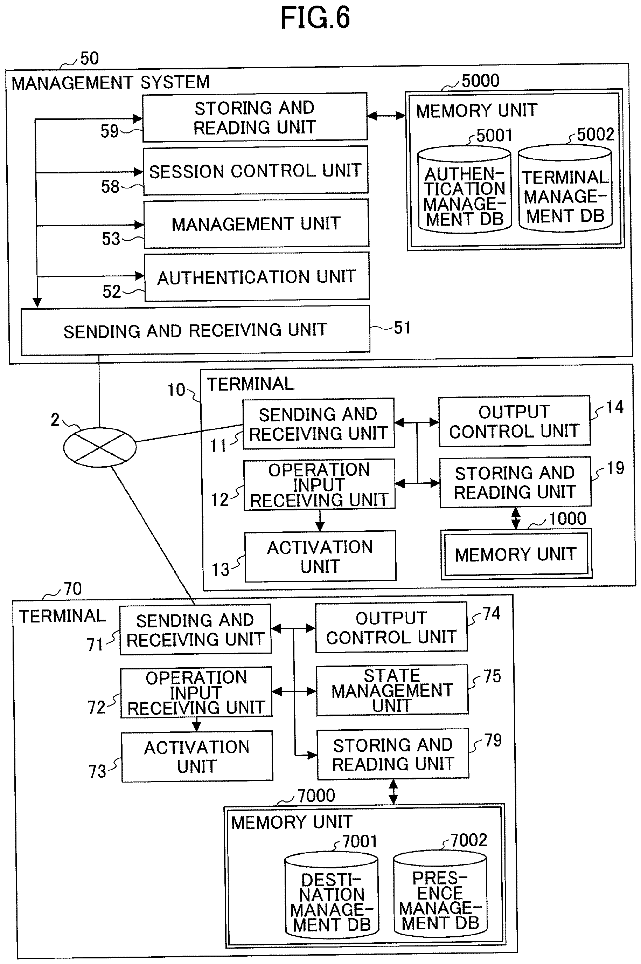

Next, a functional configuration of the present embodiment will be described. FIG. 6 is a block diagram illustrating functions (elements) of terminals 10, 70, and the management system 50 included as a part of the communication system 1 according to the present embodiment. It should be noted that in FIG. 6, the terminals 10, 70, and the management 50 are connected to perform data communication via the communication network 2. The management system 50 manages communication between the terminal (communication terminal) 70 and the terminal (destination terminal) 10.

### <Functional configuration of terminal>

The terminals 10 and 70 include the sending and receiving units 11 and 71, the operation input receiving units 12 and 72, the activation units 13 and 73, the output control units 14 and 74, and the storing and reading units 19 and 79, respectively. The terminal 70 also includes the state management unit 75. These units are functions realized by the elements illustrated in FIG. 3 that operate according to instructions from the CPU 101 or 701 to execute an application (program) read from the flash memory 104 or the EEPROM 704 and loaded on the RAM 103 or 703.

Further, the terminal 10 includes a memory unit 1000 or 7000 constituted with the ROM 102 or 702, the RAM 103 or 703, and the flash memory 104 or the EEPROM 704 illustrated in FIG. 3.

### (Destination management table)

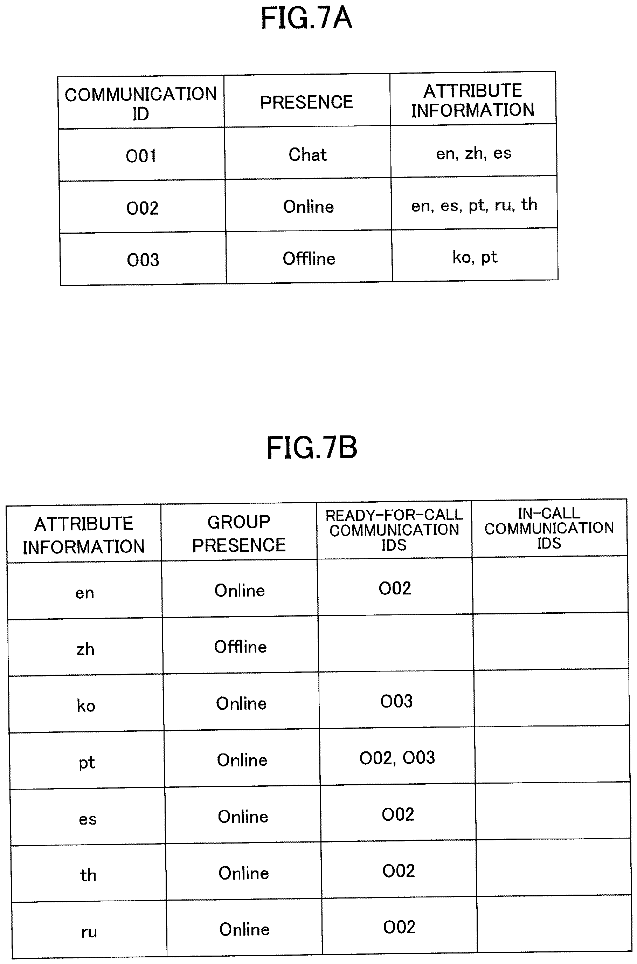

FIG. 7A is a schematic view illustrating a destination management table. It should be noted that a destination management table in FIG. 7A represents a state when a presence management table is in a state of Table 3, which will be described later. In the storage unit 7000 of the terminal 70, a destination management DB 7001 is constituted with a destination management table as illustrated in FIG. 7A. In this destination management table, the communication ID of a terminal 10 of an operator, which is a destination candidate; a presence that represents a state of the destination candidate; and attribute information that represents attributes of this destination candidate are associated with each other, to be managed. Specifically, as illustrated in FIG. 7A, the communication ID of "O01" of the terminal 10a is associated with "Chat" that represents that the terminal 10a is in a state of communicating with the other terminals, and attributes of "en, zh, es". Also, the communication ID of "O02" of the terminal 10b is associated with "Online" that represents that the terminal 10b is in a state of being ready to start communicating with the other terminals, and attributes of "en, es, pt, ru, th". Also, the communication ID of "O03" of the terminal 10c is associated with "Offline" that represents that the terminal 10c is not in a state of being ready to start communicating with the other terminals, and attributes of "ko, pt".

It should be noted that the communication ID is information for identifying a communication destination (communication counterpart) in the communication system 1. The communication ID is not limited specifically, and may be identification information of a terminal 10, identification information or an account of a user of the terminal 10, or the like. It should be noted that "presence" will be described in detail later.

### (Presence management table)

FIG. 7B is a schematic view illustrating a presence management table. In the storage unit 7000 of the terminal 70, a presence management DB 7002 is constituted with a presence management table as illustrated in FIG. 7B. In this presence management table, attribute information that represents an attribute of a destination candidate; presence information that represents a presence of a group of destination candidates having the attribute; communication IDs of terminals 10 having the presence of "Online" among the destination candidates having the attribute; and communication IDs of terminals 10 having the presence of "Chat" among the destination candidates having the attribute are associated with each other, to be managed. In other words, each attribute is associated with a presence of a group representing whether at least one of terminals (destination candidates) 10 among one or more terminals (destination candidates) 10 associated with the attribute is in a state of being ready to start communication.

Next, a functional configuration in the terminal 10 will be described in detail. It should be noted that in the following, when the functional configuration in the terminal 10 is described, relations between functions and main elements among the elements illustrated in FIG. 3, which are used for realizing the functions, will also be described.

The sending and receiving unit 11 is implemented by instructions from the CPU 101, and the network I/F 111. The sending and receiving unit 71 is implemented by instructions from the CPU 701, and the communicator 711. The sending and receiving units 11 and 71 execute sending and receiving various data (or information) items to and from a terminal, an apparatus, a system, and the like, as communication counterparts, via the communication network 2.

The operation input receiving unit 12 is implemented by instructions from the CPU 101, the operation buttons (108a, 108b, 108c, 108d, and 108e), and the power supply switch 109. The operation input receiving unit 72 is implemented by instructions from the CPU 701, and the touch panel 721. The operation input receiving units 12 and 72 receive various inputs or various selections performed by the user.

The activation units 13 and 73 are implemented by instructions from the CPUs 101 and 701, to activate operations of the communication applications A1 and A7, respectively.

The output control units 14 and 74 are implemented by instructions from the CPUs 101 and 701, respectively, along with the display I/F 117 and the sound input and output I/F 116, to control outputting image data and sound data.

The state management unit 75 of the terminal 70 is implemented by instructions from the CPU 701, to manage a state of a destination candidate based on presence information transmitted from the terminal 10 to the terminal 70.

The storing and reading units 19 and 79 are implemented by instructions from the CPUs 101 and 701, to execute storing various data items in the memory units 1000 and 7000 and reading various data items stored in the memory units 1000 and 7000, respectively.

### <Functional configuration of management system>

The management system 50 includes a sending and receiving unit 51, an authentication unit 52, a management unit 53, a session control unit 58, and a storing and reading unit 59. These units are functions realized by the elements illustrated in FIG. 4 that operate according to instructions from the CPU 201 to execute a program for the management system 50 read from the HD 204 and loaded on the RAM 203. Further, the management system 50 includes a memory unit 5000 constituted with the HD 204. Furthermore, the memory unit 5000 includes databases (DBs) constituted with respective tables as described below.

### (Authentication management table)

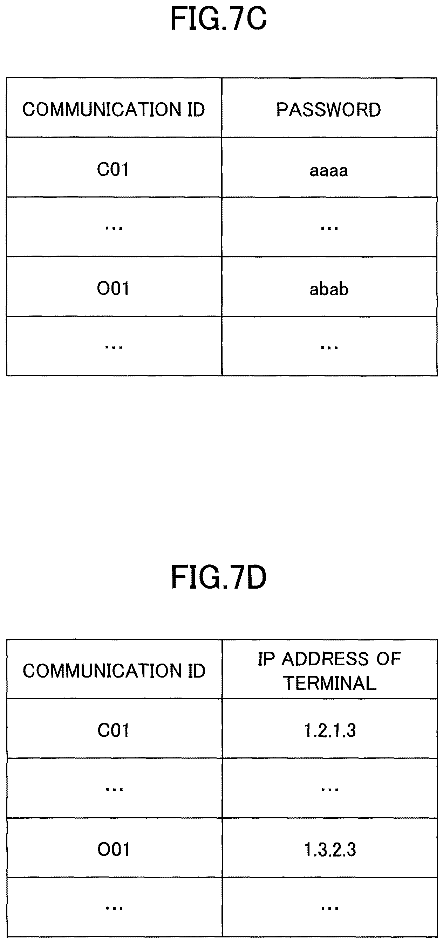

FIG. 7C is a schematic view illustrating an authentication management table. In the memory unit 5000, an authentication management DB 5001 is constituted with the authentication management table as illustrated in FIG. 7C. In this authentication management table, for the communication ID of every terminal 10 and 70 managed by the management system 50, the communication ID is associated with a password for authentication, and stored to be managed.

### (Terminal management table)

FIG. 7D is a schematic view illustrating a terminal management table. In the memory unit 5000, a terminal management DB 5002 is constituted with a terminal management table as illustrated in FIG. 7D. In this terminal management table, for each of the terminals 10 and 70, the communication ID is associated with an IP address of the terminal 10 or 70, and stored to be managed.

### <Functional configuration of management system>

Next, a functional configuration of the management system 50 will be described in detail. It should be noted that in the following, when the functional configuration of the management system 50 is described, relations between functions and main elements among the elements illustrated in FIG. 4, which are used for realizing the functions of the management system 50, will also be described.

The sending and receiving unit 51 is implemented by instructions from the CPU 201, and the network I/F 209, and performs sending and receiving various data (or information) items to and from a terminal, an apparatus, and/or a system via the communication network 2.

The authentication unit 52 is implemented by instructions from the CPU 201, searches in the authentication management table by using a communication ID and a password received by the sending and receiving unit 51 as the search key, and determines whether the same communication ID and password are managed in the authentication management table, to authenticate a terminal.

The management unit 53 is implemented by instructions from the CPU 201, and in the terminal management table (see FIG. 7D), manages terminals 10 currently logged in.

The session control unit 58 controls a session for sending and receiving content data between the terminals 10 and 70, by instructions from the CPU 201. The control includes establishing a session, controlling the terminal 10 or 70 to participate in an established session and to exit from the session, and the like.

The storing and reading unit 59 is implemented by instructions from the CPU 201 and the HDD 205, or implemented by instructions from the CPU 201. The storing and reading unit 59 stores various data items in the memory unit 5000, and extracts various data items stored in the memory unit 5000.

### <<Processes and operations of communication system 1>>

Next, processes and operations in the communication system 1 will be described.

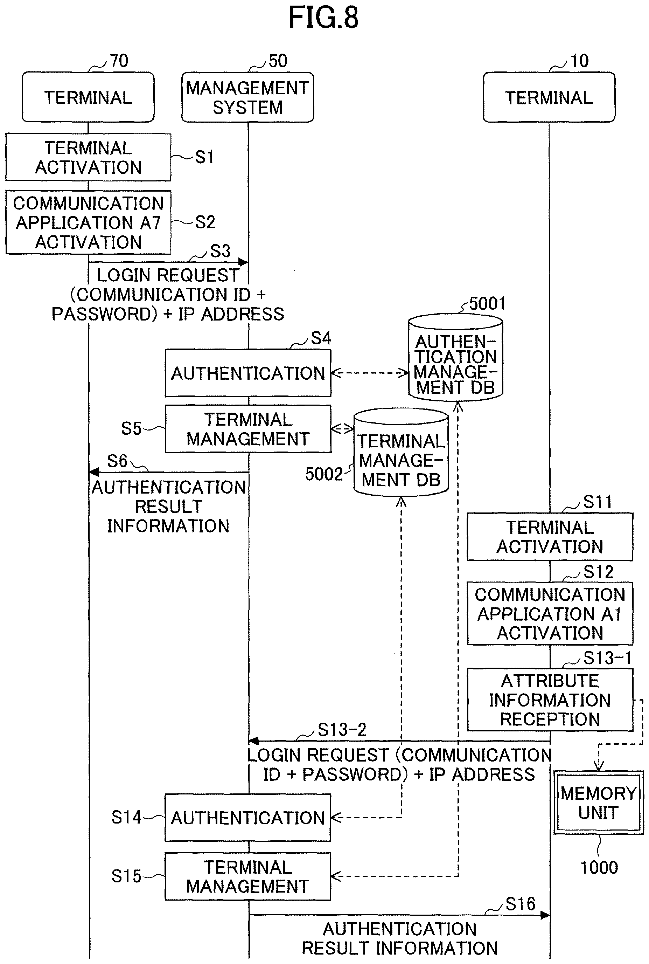

First, by using FIG. 8, a process will be described in which terminals 10 and 70 log in to the management system 50. FIG. 8 is a sequence chart illustrating a process in which terminals 10 and 70 log in to the management system 50.

When the user of the terminal 70 turns on the power source switch, the operation input receiving unit 72 receives the power-on operation, and activates the terminal 70 (Step S1). Once the terminal 70 has been activated, the activation unit 73 activates the communication application A7 installed in the terminal 70 (Step S2). Thereafter, a process in the terminal 70 is executed by instructions of the communication application A7.

The sending and receiving unit 71 of the terminal 70 transmits a login request to the management system 50 through the communication network 2 (Step S3). This login request includes the communication ID and a password for identifying the terminal itself (terminal 70), which is the login requestor. In the present embodiment, a communication ID of a terminal 70 starts with a character "C" so that it can be distinguished as a terminal 70 on the customer side. In the following, assume that communication IDs of the terminals 70x and 70y are "C01, C02".

The sending and receiving unit 51 of the management system 50 receives a login request. By having the login request transmitted from the terminal 70 to the management system 50, the management system 50 on the receiving side can obtain the IP address of the terminal 70 on the sending side.

Next, the authentication unit 52 of the management system 50 searches in the authentication management table (see FIG. 7C) in the memory unit 5000, by using the communication ID and password included in the login request as the search key, and determines whether the same communication ID and password are managed in the authentication management table, for authentication (Step S4).

If the login request is authenticated by the authentication unit 52 as a request from a terminal 70 having valid use permission, the session management unit 53 associates the communication ID with the IP address of the terminal 70, and stores it in the terminal management table (see FIG. 7D) (Step S5). Thereby, the terminal control table manages information for accessing to the logged-in terminal 70.

The sending and receiving unit 51 of the management system 50 transmits authentication result information that represents an authentication result obtained by the authentication unit 52, to the terminal 70 as the login requestor via the communication network 2 (Step S6). Thus, the sending and receiving unit 71 of the terminal 70 receives the authentication result information. In the following, a case will be described in which authentication of the terminals 70x and 70y as login requestors has succeeded, and the terminals 70x and 70y have logged in to the management system 50.

Meanwhile, when the user of the terminal 10 on the operator side turns on the power source switch 109, the operation input receiving unit 12 receives the power-on operation, and activates the terminal 10 (Step S11). Once the terminal 10 has been activated, the activation unit 13 activates the communication application A1 installed in the terminal 10 (Step S12). Thereafter, a process in the terminal 10 is executed by instructions of the communication application A1.

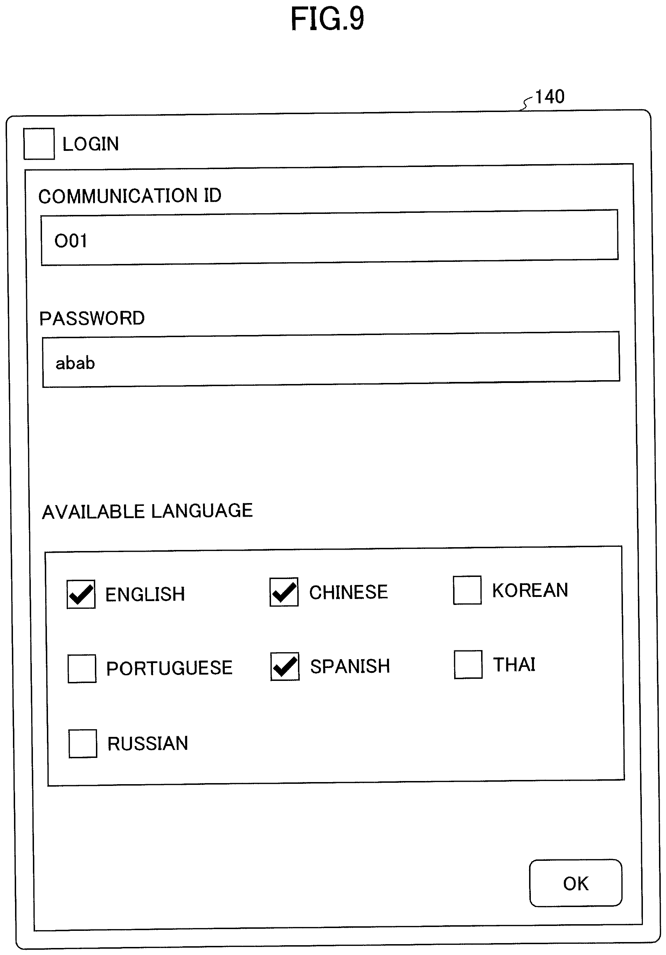

The output control unit 14 of the terminal 10 outputs a reception screen that receives input (designation) of one or more attributes of the operator as the user of the terminal 10 to the display 120. FIG. 9 is a diagram illustrating an example of a reception screen. The reception screen 140 includes fields to receive input of a communication ID and a password, and in addition, options of available languages and check boxes for selection as attributes of the operator. Once the operator has selected one or more options of the available languages, and performs an operation to press the OK button on the reception screen 140, the operation input receiving unit 12 receives input of the attributes of the operator (Step S13-1). The storing and reading unit 19 causes the storage unit 1000 to store attribute information corresponding to the selected attributes. In the following, assume that attribute information corresponding to the available languages "English, Chinese, Korean, Portuguese, Spanish, Thai, and Russian" are denoted as "en, zh, ko, pt, es, th, and ru", respectively. It should be noted that in the example illustrated in FIG. 9, English, Chinese, and Spanish are selected as the attributes associated with the terminal 10, which are available languages (usable languages) with the operator.

The terminal 10 transmits a login request to the management system 50, and logs in to the management system 50 (Steps S13-2, S14, S15, and S16). Since this process is the same as the process of Steps S3, S4, S5, and S6 between the terminal 70 and the management system 50, description is omitted. However, a communication ID of a terminal 10 transmitted from a terminal 10 to the management system 50 starts with a character "O" so that it can be distinguished as a terminal 10 on the operator side. In the following, assume that communication IDs of the terminals 10a, 10b, and 10c are "O01, O02, and O03", respectively. Once authentication of the terminals 10a, 10b, and 10c as login requestors has succeeded, the terminals 10a, 10b, and 10c log in to the management system 50.

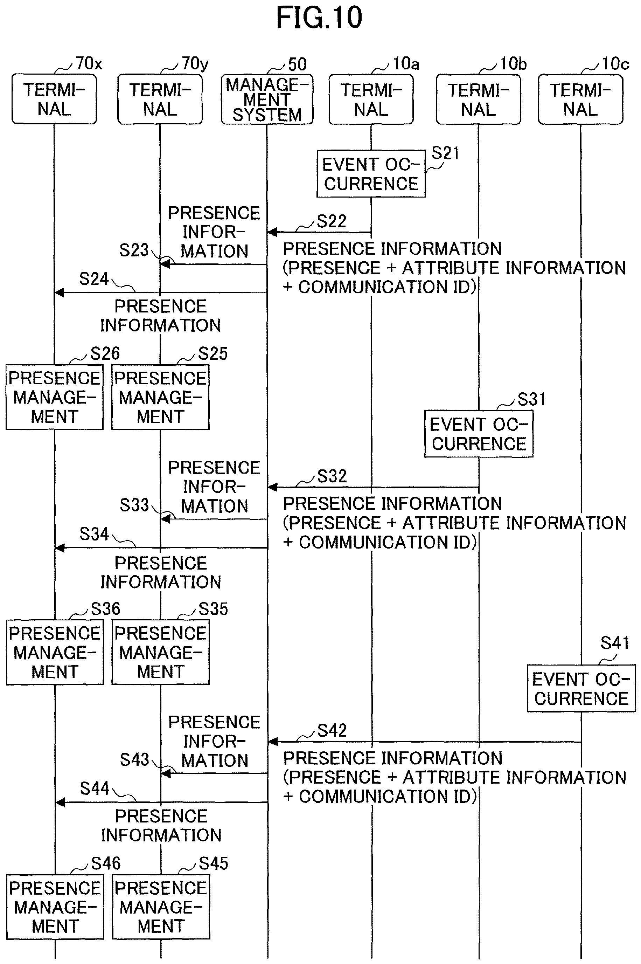

Next, a process of transmitting presence information, which represents the state on the operator side, from the terminal 10 to the terminal 70 will be described by using FIG. 10. FIG. 10 is a sequence chart illustrating a process of transmitting presence information.

The communication application A1 manages, in the storage unit 1000, an event that causes a state transition, and a presence after the transition caused by the event. The presence is used for identifying whether the operator as the user of the terminal 10 is in a state of being ready for a call. A presence that represents a state of being ready for a call includes "Online" that represents a state where the terminal 10 has logged in to the management system 50, and does not communicate with the terminal 70 on the customer side. A presence that represents a state of being not ready for a call includes "Offline" that represents a state where the terminal 10 does not log in to the management system 50, and "chat" that represents a state where the terminal 10 has logged in to the management system 50, but has already communicated with the terminal 70 on the customer side, and hence, cannot newly start communication. It should be noted that as the presence in the present embodiment, any information usable for identifying whether it is a state of being ready for a call may be used, which is not limited to the one described above. Also, the presence may also include something based on input from the user. Among the presence based on input from the user, as an example of a presence that represents a state of being not ready for a call, "away from the seat" may be considered.

As an example of an event that causes a transition to the presence of "Online", reception of authentication result information by the terminal 10 at Step S16, a reception of input of an end request for a call from the user, or the like may be considered. As an example of an event that causes a transition to the presence of "Offline", a logout from the management system 50 by the terminal 10 may be considered. As an example of an event that causes a transition to the presence of "chat", establishment of communication between the terminal 70 and the terminal 10 (at Step S90, as will be described later) may be considered. It should be noted that these events and presences are merely examples and the embodiment is not limited as such. It should be noted that the event that causes a transition of the presence is not limited in particular as long as it is detectable, and can be set discretionarily depending on content of a process executed by a communication protocol or the communication application A1.

If one of the above events occurs in the terminal 10a (Step S21), the storing and reading unit 19 reads attribute information, for example, "en, zh, es" from the storage unit 1000. The attribute information to be read corresponds to the attributes of "English, Chinese, and Spanish" or the like that has been input by the operator as the user of the terminal 10a when logging in (see Step S13-1). The sending and receiving unit 11 of the terminal 10a transmits the presence that represents a state after the transition caused by the event at Step S21, the attribute information read from the storage unit 1000, and the presence information that includes the communication ID of "O01" of the terminal 10a as the transmission source to the management system 50 (Step S22). For example, in response to receiving the authentication result information at Step S16, the terminal 10a transmits presence information including the presence of "Online" to the management system. Also, upon acceptance of a logout request, the terminal 10a transmits presence information including the presence of "Offline" to the management system 50. Also, in response to establishment of communication with the terminals 70, the terminal 10a transmits presence information including the presence of "chat" to the management system 50. It should be noted that if the attribute information has not been updated since the attribute information was registered in the storage unit 1000 at Step S13-1, the terminal 10a transmits presence information including the same attribute information to the management system 50 every time an event occurs.

In response to receiving the presence information transmitted by the terminal 10a, the sending and receiving unit 51 of the management system 50 transmits the received presence information to the terminals 70x and 70y on the customer side that have logged in to the management system 50 (Steps S23 and S24). A method of identifying a terminal 70 on the customer side that has logged in to the management system 50 is not limited in particular. As an example, a method may be considered that reads a communication ID starting with the character "C" from the terminal management table (see FIG. 7D).

The sending and receiving unit 71 of each of the terminals 70x and 70y receives the presence information transmitted from the terminal 10a on the operator side through the management system 50. The storing and reading unit 79 of each of the terminals 70x and 70y records the communication ID, the presence, and the attribute information included in the received presence information in the destination management table (see FIG. 7A) (Steps S25 and S26). In the case where a record that includes the same communication ID as included in the received presence information exists in the destination management table, the storing and reading unit 79 overwrites and updates this record based on the newly received presence information. Thereby, the terminals 70x and 70y can manage the latest presence on the side of the terminal 10a.

When the above event occurs in the terminal 10b on the operator side, among the terminal 10b, the management system 50, and the terminals 70x and 70y, substantially the same process as Steps S21, S22, S23, S24, S25, and S26 executed among the terminal 10a, the management system 50, the terminal 70x and 70y, is executed (Steps S31, S32, S33, S34, S35, and S36). When the above event occurs in the terminal 10c on the operator side, among the terminal 10c, the management system 50, and the terminal 70x and 70y, substantially the same process as Steps S21, S22, S23, S24, S25, and S26 executed among the terminal 10a, the management system 50, the terminal 70x and 70y, is executed (Steps S41, S42, S43, S44, S45, and S46). Thereby, the terminals 70x and 70y can manage the latest presence on the sides of the terminals 10b and 10c.

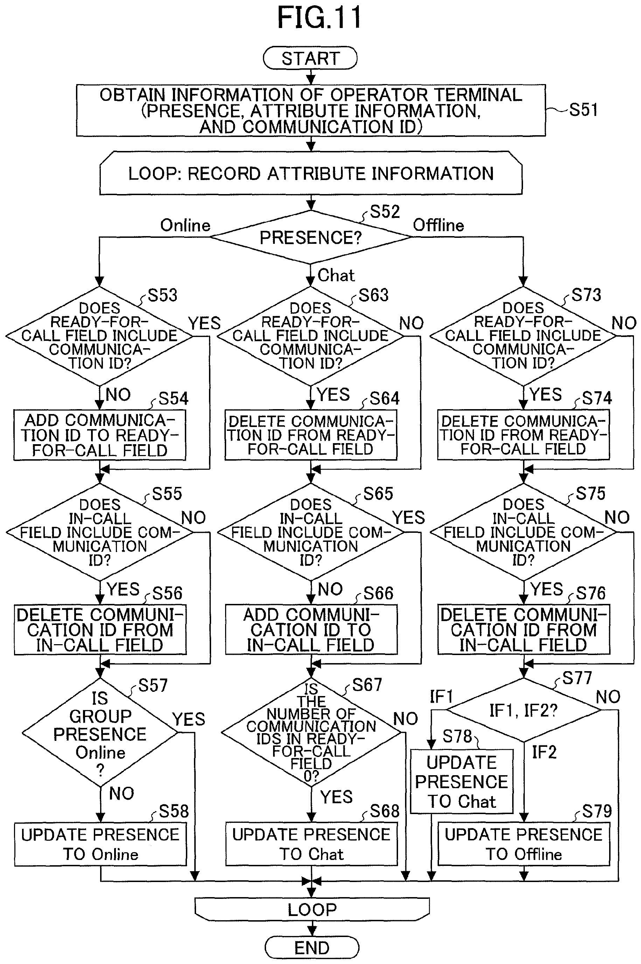

Next, a process of managing the group presence for each attribute will be described by using FIG. 11. FIG. 11 is a flowchart illustrating a process of managing presence for each attribute. It should be noted that the group presence of "Online" represents that one of destination candidates of the group having this attribute has the presence of "Online" representing that it is ready for a call. The group presence of "Chat" represents that no destination candidate of the group is in a state of the presence of "Online", and one or more destination candidates have the presence of "Chat" representing an in-call state. The group presence of "Offline" represents that all destination candidates of the group having this attribute have the presence of "Offline". In the following, an example of a process of determining the group presence will be described. It should be noted that in the following, although the process will be described with the terminal 70x, substantially the same process can be executed with the terminal 70y.

Every time the presence in the destination management table (see FIG. 7A) is updated at Steps S26, S36, and S46, the state management unit 75 of the terminal 70x obtains information recorded in the updated record (Step S51). The obtained information includes the communication ID of the terminal 10 as the transmission source, the presence that represents the latest states of destination candidates, and the attribute information that represents the attributes of the destination candidates.

The state management unit 75 of the terminal 70x updates each record that includes the attribute information obtained at Step S51 in the presence management table. In other words, in the case where the obtained attribute information is "en, zh, es", the state management unit 75 updates each record that includes the attribute information of "en, zh, es".

In the following, as an example, a process will be described in which presence information of "Online, (en, zh, es), O01" is transmitted from the terminal 10a to the terminal 70x, and the information is obtained at Step S51 (Online at Step S52).

First, in a loop process, a process will be described in the case of updating a record in which the attribute information of "en" is recorded in the presence management table. The state management unit 75 of the terminal 70x refers to the ready-for-call field in the record in which the attribute information of "en" is recorded in the presence management table (see FIG. 7B). Thereby, the state management unit 75 determines whether the communication ID of "O01" obtained at Step S51 is included in the ready-for-call field (Step S53). In the case of having determined that the communication ID of "O01" obtained at Step S51 is not included in the ready-for-call field in the presence management table (NO at Step S53), the state management unit 75 adds the obtained communication ID of "O01" to the ready-for-call field (Step S54).

In the case where Step S54 has been completed or in the case of YES at Step S53, the state management unit 75 of the terminal 70x refers to the in-call field in the record in which the attribute information of "en" is recorded in the presence management table (see FIG. 7B). Thereby, the state management unit 75 determines whether the communication ID of "O01" obtained at Step S51 is included in the in-call field (Step S55). In the case of having determined that the communication ID of "O01" obtained at Step S51 is included in the in-call field in the presence management table (YES at Step S55), the state management unit 75 deletes the obtained communication ID of "O01" from the in-call field (Step S56). The process executed up to here enables, in the case where the presence on the side of the terminal 10a transitions from "Chat" to "Online", and in the case of transitioning from "Offline" to "Online", the communication ID of the terminal 10a only in the ready-for-call field in the record in which the attribute information of "en" is recorded in the presence management table.

In the case where Step S56 has been completed or in the case of NO at Step S55, the state management unit 75 of the terminal 70x refers to the group presence in the record in which the attribute information of "en" is recorded in the presence management table (see FIG. 7B). Thereby, the state management unit 75 determines whether the group presence is "Online" (Step S57).

In the case of having determined that the group presence in the record in which the attribute information of "en" is recorded is not "Online" (NO at Step S57), the state management unit 75 updates this presence to "Online". In the case of having determined that the group presence in the record in which the attribute information of "en" is recorded is "Online" (YES at Step S57), the state management unit 75 does not update the group presence in the record in which the attribute information of "en" is recorded. The process executed up to here causes the group presence in the record in which the attribute information of "en" is recorded in the presence management table to transition to "Online".

Since the attribute information of "en, zh, es" has been obtained at Step S51, the state management unit 75 applies the loop process to each record in which the attribute information of "zh, es" is recorded in the presence management table, to update the records similarly. Once the loop process is completed, the presence management table in FIG. 7A becomes as illustrated in Table 1. As described above, when the status of the terminal 10a changes to "Online", the presence management table of each terminal 70 is updated such that the communication ID of "O01" is added to the ready-for-call field corresponding to the attribute of "en, zh, es" associated with the communication ID of "O01" of the terminal 10a.

**[Table 1]**

| ATTRIBUTE INFORMATION | GROUP PRESENCE | READY-FOR-CALL COMMUNICATION IDS | IN-CALL COMMUNICATION IDS |
|---|---|---|---|
| en | Online | O01, O02 | |
| zh | Online | O01 | |
| ko | Online | O03 | |
| pt | Online | O02, O03 | |
| es | Online | O01, O02 | |
| th | Online | O02 | |
| ru | Online | O02 | |

Next, a process will be described in which presence information of "Chat, (en, zh, es), O01" is transmitted from the terminal 10a to the terminal 70x, and the information is obtained at Step S51 (Chat at Step S52).

First, in the loop process, a process will be described in the case of updating a record in which the attribute information of "en" is recorded in the presence management table. The state management unit 75 of the terminal 70x refers to the ready-for-call field in the record in which the attribute information of "en" is recorded in the presence management table (see Table 1). Thereby, the state management unit 75 determines whether the communication ID of "O01" obtained at Step S51 is included in the ready-for-call field (Step S63). In the case of having determined that the communication ID of "O01" obtained at Step S51 is included in the ready-for-call field in the presence management table (YES at Step S63), the state management unit 75 deletes the obtained communication ID from the ready-for-call field (Step S64).

In the case where Step S64 is completed or in the case of NO at Step S63, the state management unit 75 of the terminal 70x refers to the ready-for-call field in the record in which the attribute information of "en" is recorded in the presence management table (see Table 1). Thereby, the state management unit 75 determines whether the communication ID of "O01" obtained at Step S51 is included in the in-call field (Step S65). In the case of having determined that the communication ID of "O01" obtained at Step S51 is not included in the in-call field in the presence management table (NO at Step S65), the state management unit 75 adds the obtained communication ID of "O01" to the in-call field (Step S66). The process executed up to here enables to record the communication ID of the terminal 10a only in the in-call field in the record in which the attribute information of "en" is recorded in the presence management table.

In the case where Step S66 is completed or in the case of YES at Step S65, the state management unit 75 of the terminal 70x refers to the ready-for-call field in the record in which the attribute information of "en" is recorded in the presence management table (see Table 1). Thereby, the state management unit 75 determines whether the number of communication IDs currently recorded in the ready-for-call field in the record in which the attribute information of "en" is recorded is 0 (Step S67).

In the case where the number of communication IDs currently recorded in the ready-for-call field in the record in which the attribute information of "en" is recorded is 0 (YES at Step S67), the state management unit 75 updates the group presence in the record in which the attribute information of "en" is recorded to "Chat" (Step S68). In the case where the number of communication IDs currently recorded in the ready-for-call field in the record in which the attribute information of "en" is recorded is not 0 (NO at Step S67), the state management unit 75 does not update the group presence in the record in which the attribute information of "en" is recorded. In other words, in the case where a communication ID is recorded in the ready-for-call field in the record in which the attribute information of "en" is recorded, the corresponding presence is not updated so as to be maintained as "Online".

Since the attribute information of "en, zh, es" has been obtained at Step S51, the state management unit 75 applies the loop process to each record in which the attribute information of "zh, es" is recorded in the presence management table, to update the records similarly. Thereby, the presence management table of Table 1 becomes as illustrated in Table 2. As described above, when the status of the terminal 10a changes to "Chat", the presence management table of each terminal 70 is updated such that the communication ID of "O01" is added to the in-call field corresponding to the attribute of "en, zh, es" associated with the communication ID of "O01" of the terminal 10a.

**[Table 2]**

| ATTRIBUTE INFORMATION | GROUP PRESENCE | READY-FOR-CALL COMMUNICATION IDS | IN-CALL COMMUNICATION IDS |
|---|---|---|---|
| en | Online | O02 | O01 |
| zh | Chat | | O01 |
| ko | Online | O03 | |
| pt | Online | O02, O03 | |
| es | Online | O02 | O01 |
| th | Online | O02 | |
| ru | Online | O02 | |

Next, a process will be described in which presence information of "Offline, (ko, pt), O03" is transmitted from the terminal 10c to the terminal 70x, and the information is obtained at Step S51 (Offline at Step S52).

First, in the loop process, a process will be described in the case of updating a record in which the attribute information of "ko" is recorded in the presence management table. The state management unit 75 of the terminal 70x refers to the ready-for-call field in the record in which the attribute information of "ko" is recorded in the presence management table (see Table 2). Thereby, the state management unit 75 determines whether the communication ID of "O03" obtained at Step S51 is included in the ready-for-call field (Step S73). In the case of having determined that the communication ID of "O03" obtained at Step S51 is included in the ready-for-call field in the presence management table (YES at Step S63), the state management unit 75 deletes the obtained communication ID of "O03" from the ready-for-call field (Step S74).

In the case where Step S74 is completed or in the case of NO at Step S73, the state management unit 75 of the terminal 70x refers to the in-call field in the record in which the attribute information of "ko" is recorded in the presence management table (see Table 2). Thereby, the state management unit 75 determines whether the communication ID of "O03" obtained at Step S51 is included in the in-call field (Step S75). In the case of having determined that the communication ID of "O03" obtained at Step S51 is included in the in-call field in the presence management table (YES at Step S75), the state management unit 75 deletes the obtained communication ID of "O03" from the in-call field (Step S76). The process executed up to here causes the communication ID of the terminal 10c to be deleted from the record in which the attribute information of "ko" is recorded in the presence management table.

In the case where Step S76 is completed or in the case of NO at Step S75, the state management unit 75 of the terminal 70x refers to the ready-for-call and in-call fields in the record in which the attribute information of "ko" is recorded in the presence management table (see Table 2). Thereby, the state management unit 75 determines whether a condition IF1 or IF2 is satisfied (Step S77). The condition IF1 represents a case where the number of communication IDs currently recorded in the ready-for-call field is 0, and the number of communication IDs currently recorded in the in-call field is not 0, in the record in which the attribute information of "ko" is recorded. The condition IF2 represents a case where the number of communication IDs currently recorded in the ready-for-call field is 0, and the number of communication IDs currently recorded in the in-call field is 0, in the record in which the attribute information of "ko" is recorded.

In the case where the number of communication IDs currently recorded in the ready-for-call field is 0, and the number of communication IDs currently recorded in the in-call field is not 0 in the record, in which the attribute information of "ko" is recorded (IF1 at Step S77), the state management unit 75 updates the group presence to "Chat" in the record in which the attribute information of "ko" is recorded in the presence management table (Step S78). In the case where the number of communication IDs currently recorded in the ready-for-call field is 0, and the number of communication IDs currently recorded in the in-call field is 0 in the record, in which the attribute information of "ko" is recorded (IF2 at Step S77), the state management unit 75 updates the group presence to "Offline" in the record in which the attribute information of "ko" is recorded in the presence management table (Step S79). In the case where neither IF1 nor IF2 is satisfied at Step S77 (NO at Step S77), the state management unit 75 does not update the group presence so as to maintain "Online" in the record in which the attribute information of "ko" is recorded.

Since the attribute information of "ko, pt" has been obtained at Step S51, the state management unit 75 applies the loop process to the record in which the attribute information of "pt" is recorded in the presence management table, to update the record similarly. Thereby, the presence management table of Table 2 becomes as illustrated in Table 3. As described above, when the status of the terminal 10c changes to "Offline", the presence management table of each terminal 70 is updated such that the communication ID of "O03" is deleted from the ready-for-call field corresponding to the attribute of "ko, pt" associated with the communication ID of "O03" of the terminal 10c.

**[Table 3]**

| ATTRIBUTE INFORMATION | GROUP PRESENCE | READY-FOR-CALL COMMUNICATION IDS | IN-CALL COMMUNICATION IDS |
|---|---|---|---|
| en | Online | O02 | O01 |
| zh | Chat | | O01 |
| ko | Offline | | |
| pt | Online | O02 | |
| es | Online | O02 | O01 |
| th | Online | O02 | |
| ru | Online | O02 | |

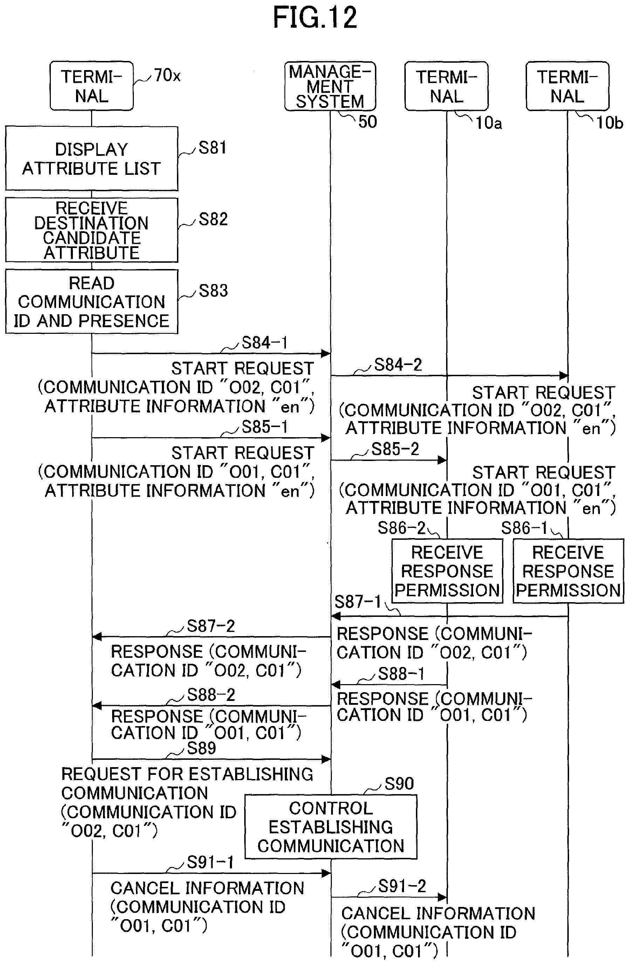

Next, a process of starting communication will be described by using FIG. 12. FIG. 12 is a sequence chart illustrating a process of starting communication. In the following, although a process will be described in which the terminal 70x starts communication, the terminal 70y can also start communication by substantially the same process.

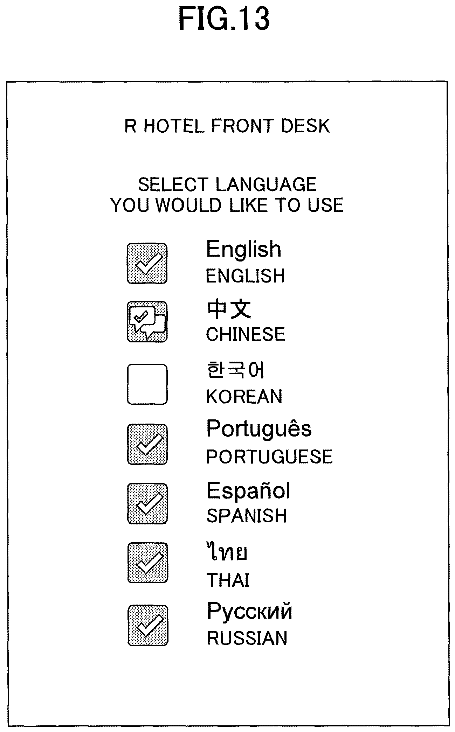

The operation input receiving unit 12 of the terminal 70x receives a display request of an attribute list of destination candidates in response to an input operation by the user. In response to the display request, the output control unit 74 obtains attribute information items currently recorded in the presence management table (see Table 3), and the group presence corresponding to the attribute information items. In other words, the output control unit 74 obtains information that represents, for each attribute, which terminal (destination candidate) is in a state of "Online" or ready to start communication among one or more terminals (destination candidates) 10 associated with the attribute. The storage unit 7000 stores in advance data of display images corresponding to attribute information items, and display images corresponding to the group presence. For example, data of a display image corresponding to the attribute information of "en" is text data that represents "English". Also, for example, data items of display images corresponding to the group presence of "Online, Offline, and Chat" are image data items of icons representing a check mark, a blank image, and a bubble, respectively. The output control unit 74 obtains, for each pair of an obtained attribute information item and a group presence, a corresponding pair of data items of a text and a display image of an icon, from a storage unit 7000. The output control unit 74 generates image data of an attribute list by arranging the obtained pairs of data items of display images such that the items in each pair are located on the same row in a predetermined display area. The output control unit 74 outputs the generated image data of the attribute list to the display 720 (Step S81). FIG. 13 is a diagram illustrating an example of an attribute list displayed in the case where the presence management table is in the state of Table 3.

The output control unit 74 repeatedly executes the above process every time the presence management table is updated. Thereby, an attribute list indicating the latest group presence for the respective attributes is displayed on the display 720.

At Step S81, the output control unit 74 outputs an icon presenting a check mark corresponding to "Online" as a selectable icon, and an icon presenting a blank image or a bubble corresponding to "Offline, Chat" as a non-selectable icon, among the icons. For example, even if the user performs an operation of pressing an icon of a blank image corresponding to "Korean" or an icon presenting a bubble corresponding to "Chinese" in the attribute list illustrated in FIG. 13, the operation input receiving unit 72 does not receive the input operation. It should be noted that when an operation of pressing an icon of a blank image or an icon presenting a bubble is performed, the output control unit 74 may output a message stating that a call cannot be readily started or a message suggesting a wait for a timing to start a call to the display 720. In other words, the output control unit 74 can refer to the presence management table illustrated in Table 3, to display a screen as illustrated in FIG. 13 on the display 720. Specifically, the output control unit 74 displays messages (items) that represent the attributes of English, Chinese, Korean, Portuguese, Spanish, Thai, and Russian, and icons (items) that represent the group presence corresponding to the respective attributes. The output control unit 74 displays an icon that represents a group presence associated with a message that corresponds to the attribute. The icons that represent the group presence represent whether one of terminals 10 among the terminals 10 associated with the attributes can start communication.

On the screen illustrated in FIG. 13, if the user presses an icon presenting a check mark corresponding to one of the attribute of "English, Portuguese, Spanish, Thai, and Russian", the operation input receiving unit 72 receives a selection of the attribute corresponding to the icon (Step S82). For example, if an icon of a check mark corresponding to the display of English is pressed, the operation input receiving unit 72 receives "English" as a destination candidate attribute.

Once a selection of the attribute has been received, the storing and reading unit 79 uses the attribute information of "en" that represents the attribute selected at Step S82 as the search key, to search in the destination management table (see FIG. 7A) so as to read corresponding pairs of communication IDs and presences (Step S83). For example, in the case where attribute information that represents the attribute selected at Step S82 is "en", a pair of "O01, Chat" and a pair of "O02, Online" are read from the destination management table in FIG. 7A as pairs of communication IDs and presences (statuses).

The sending and receiving unit 71 of the terminal 70x transmits to the management system 50 a start request for a call that includes, among the communication IDs read at Step S83, the communication ID of "O02" having the presence of "Online", the communication ID of "C01" of the terminal 70x as the start requestor, and the attribute information of "en" representing the attribute selected at Step S82 (Step S84-1).

In response to receiving the start request of communication transmitted by the terminal 70x, the sending and receiving unit 51 of the management system 50 transmits this start request for a call to the terminal 10b identified by the communication ID of "O02" included in the start request for a call (Step S84-2). In other words, the sending and receiving unit 51 transmits a request for starting communication to one or more terminals 10 in states of being ready to start communication among the terminals 10 associated with an attribute selected by the user of the terminal 70x.

During a period after having transmitted the start request for a call, and before receiving a response, in the case where the destination management table is updated at Step S26, S36, or S46, the terminal 70x repeatedly executes Step S83. Thereby, in the case where the presence on the side of the terminal 10a is updated to "Online", and the communication ID of "O01" is extracted as a communication ID having the corresponding presence of "Online", the sending and receiving unit 71 of the terminal 70x transmits a start request for a call including the communication ID of "O01" to the management system 50 (Step S85-1). It should be noted that the start request for a call transmitted here also includes the attribute information of "en" that represents the attribute selected at Step S82, and the communication ID of "C01" of the terminal itself (terminal 70x).

In response to receiving the start request for a call transmitted by the terminal 70x, the sending and receiving unit 51 of the management system 50 transmits this start request of a call to the terminal 10a identified by the communication ID of "O01" included in the received start request of a call (Step S85-2).

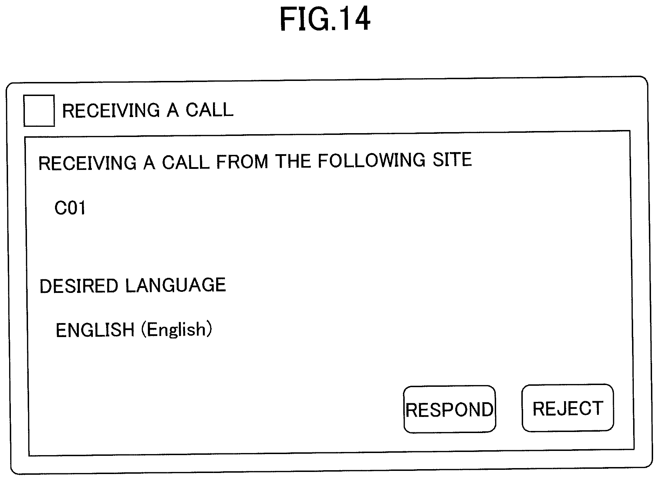

The sending and receiving unit 11 of each of the terminals 10a and 10b receives the start request for a call transmitted from the terminal 70x through the management system 50. In response to receiving the start request for a call, the output control unit 14 of each of the terminals 10a and 10b outputs a message that includes information of the requestor corresponding to the communication ID of "CO1" included in the start request for a call, and information of an attribute corresponding to the attribute information of "en" included in the start request for a call, to the display 120. FIG. 14 is an example of a message displayed on the display 120. Presenting an attribute in a message enables the operator as the user of the terminal 10 to grasp in advance which language is to be used in a call before starting the call.

The message in FIG. 14 includes a response button for receiving permission to start a call. At each of the terminals 10a and 10b, if the user presses the response button on the screen, the operation input receiving unit 12 receives it as an input operation of permission of a response (Steps S86-1 and S86-2). Once the input operation of permission of a response has been received, the sending and receiving unit 11 of each of the terminals 10a and 10b transmits response information that includes the communication ID of "C01" of the start requestor of a call, and the communication ID of "O01 or O02" of the terminal 10a or 10b itself, to the management system 50 (Steps S87-1 and S87-2). It should be noted that the above process is merely an example; in the case of receiving a start request for a call by the terminal 70, the sending and receiving unit 11 of the terminal 10 may automatically transmit a response to the start request to the terminal 70. Also, in the case of receiving multiple start requests for a call by multiple terminals 70, the sending and receiving unit 11 of the terminal 10 may transmit response information to a terminal 70 from which the request was received first among the requestors of the start requests.

The sending and receiving unit 51 of the management system 50 receives the response information transmitted by the terminal 10a, and the response information transmitted by the terminal 10b. The sending and receiving unit 51 of the management system 50 transmits the received response information to the terminal 70x identified by the communication ID of "C01" included in the response information (Steps S87-2 and S88-2) .

Having received the response information, the sending and receiving unit 71 of the terminal 70x transmits a communication establishment request for establishing communication with a terminal 10 as the transmission source of the response information, to the management system 50 (Step S89). The communication establishment request includes the communication ID of the terminal itself (terminal 70x), and the communication ID of the terminal 10 as the transmission source of the response. In the case where multiple response information items have been received, the sending and receiving unit 71 of the terminal 70x includes the communication ID of "O02" of the terminal 10b as the first transmission source of the response information in the communication establishment request. In other words, in the case where the sending and receiving unit 71 of the terminal 70x has transmitted communication start requests to the terminals 10a and 10b among destination candidates in states of being ready to start communication, and responses to the communication start request are transmitted to the terminal 70x from both the terminal 10a and the terminal 10b, the terminal 70x establishes communication with the terminal 10b that transmitted the first-received response.

The sending and receiving unit 71 of the management system 50 receives the communication establishment request. The session control unit 58 of the management system 50 executes control of establishing a session for transmitting content data including image data and sound data through the relay device 30 between the terminal 10b and the terminal 70x identified by the communication IDs of "O02, C01" included in the communication establishment request (Step S90). It should be noted that the session is not limited as above, and may be a session for transmitting content data directly between the terminal 10b and the terminal 70x through the communication network 2. Once the communication between the terminal a0b and 70x has been established, each of the terminal 10b and the terminal 70x transmits image data of an image captured at the terminal itself, and sound data collected at the terminal itself to the terminal on the other side through the relay device 30. The output control units 14 and 74 of the terminals 10b and 70x output received content data, respectively. Thereby, the users can start a call.

Once the communication has been established, the sending and receiving unit 11 of the terminal 10b transmits the presence of "Chat", the attribute information of "en, es, pt, ru, th", and the presence information including the communication ID of "O02", to the management system 50 (see Step S22).

Also, once the communication has been established, in order to cancel the start request for a call for transmission sources of responses other than the transmission source from which the response was received first, the sending and receiving unit 71 of the terminal 70x transmits cancellation information to the management system 50 (Step S91-1). The cancellation information includes the communication ID of "C01" of the terminal itself (terminal 70x), and the communication ID of "O01" of the terminal 10a as the transmission source of a response other than the transmission source from which the response was received first.

Having received the cancellation information, the sending and receiving unit 51 of the management system 50 transmits the cancellation information to the terminal 10a identified by the communication ID of "O01" included in the cancellation information (Step S91-2). The sending and receiving unit 11 of the terminal 10a receives the cancellation information transmitted by the management system 50. This enables the user on the side of the terminal 10a to grasp that the response to the start request for a call from the terminal 70x has become unnecessary.

### <<<Second embodiment>>>

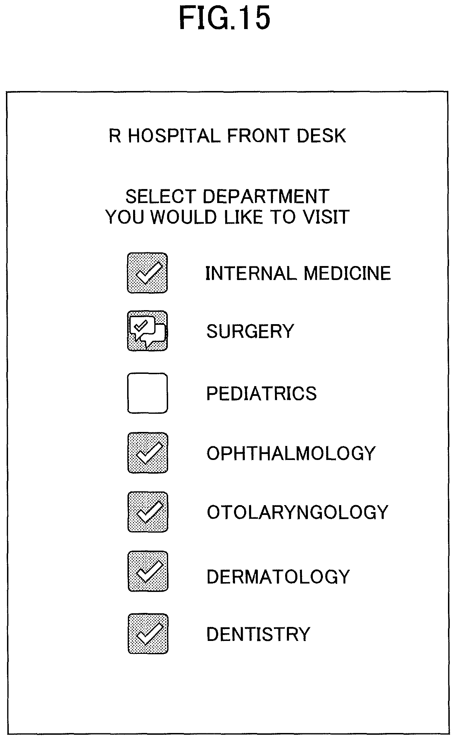

Next, a second embodiment will be described, which is a modified example of the above embodiment. In the following, points different from the above embodiment will be described for the second embodiment. In the second embodiment, available languages "English, Chinese, Korean, Portuguese, Spanish, Thai, and Russian" as attributes in the above embodiment are replaced with subjects of medical treatment "internal medicine, surgery, pediatrics, ophthalmology, otolaryngology, dermatology, and dentistry". FIG. 15 is an example of a display of an attribute list in the second embodiment (see Step S81). The terminal 10 in the second embodiment is suitably used by a reception in a general hospital that covers multiple subjects of medical treatment. Also, the terminal 70 in the second embodiment is suitably used by a patient of such a general hospital.

It should be noted that attributes are not limited to those in the above embodiments, and can be selected discretionarily. As attributes, the names of places, such as "New York, London, Tokyo", and the like to designate travel destinations, locations of real estate, and the like, and "food, clothing, household appliance", and the like to designate types of goods, are exemplified.

### <<<Third embodiment>>>

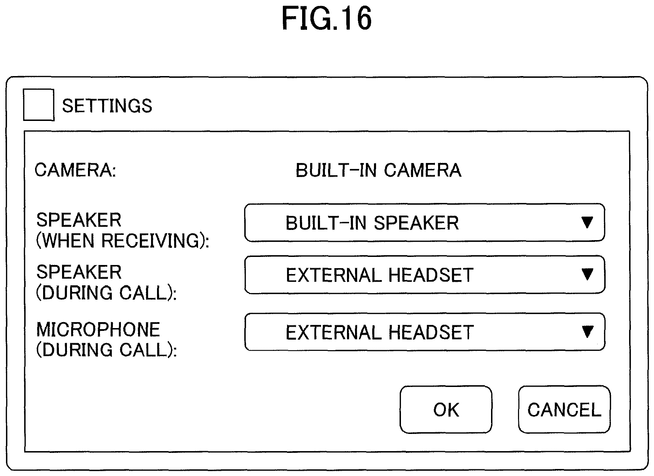

Next, a third embodiment will be described in points different from the above embodiments. In the third embodiment, the external device connection I/F 118 of a terminal 10 is connected to a headset having a microphone and a speaker built-in. At Step S13-1, the output control unit 14 of the terminal 10 further generates a screen for receiving a selection of sound input and output devices to be used when receiving a call and during the call, and outputs the screen to the display 120. FIG. 16 is an example of a screen for receiving a selection of sound input and output devices.

The operation input receiving unit 12 of the terminal 10 receives a selection of sound input and output devices to be used when receiving a call and during a call at Step S13-1. Identification information of the selected sound input and output devices is stored in the storage unit 1000 by the storing and reading unit 19.

At Step S84-2 or S85-2, when the sending and receiving unit 11 of the terminal 10 receives a start request for a call, the output control unit 14 refers to the identification information of a sound output device to be used when receiving a call that is stored in the storage unit 1000, and causes the sound output device identified by this identification information to sound a ringtone.

Next, once communication has been established with the terminal 70, the sending and receiving unit 11 of the terminal 10 receives sound data transmitted from the terminal 70. In this case, the output control unit 14 of the terminal 10 refers to the identification information of a sound output device to be used during a call that is stored in the storage unit 1000, and causes the sound output device identified by this identification information to sound a ringtone. Also, the sending and receiving unit 11 of the terminal 10 refers to the identification information of a sound input device to be used during a call that is stored in the storage unit 1000, and transmits sound data input from the sound input device identified by this identification information to the terminal 70. The above process enables to appropriately switch sound input and output devices to be used depending on timings.

### <<Effects of embodiments>>

According to a display control method of the above embodiments, the sending and receiving unit 71 (an example of an obtainer) of the terminal 70 receives attribute information that represents attributes of respective destination candidates, and presence (an example of state information) that indicates whether each of the destination candidates is in a state of being ready to start a call (an example of communication), to obtain the attribute information and the presence (see Steps S24, S34, and S35) (an example of obtaining). In other words, the sending and receiving unit 71 obtains the attribute information that represents, for each destination candidate, one or more attributes of the destination candidate, and a state information that indicates, for each of the destination candidates, whether the destination candidate is in a state of being ready to start communication. Based on the attribute information and the presence obtained by the sending and receiving unit 71, the state management unit 75 (an example of a determiner) of the terminal 70 determines whether the group presence of the destination candidates of the attribute indicated by this attribute information is "Online" (see Step S51 or S79) (an example of determining). In other words, the state management unit 75 determines for every attribute whether it is in a state where one of destination candidates can start communication among one or more destination candidates associated with the attribute. It should be noted that the group presence of "Online" represents that one of destination candidates having this attribute is ready for a call. In the case where the state management unit 75 of the terminal 70 has determined that the group presence is "Online", the output control unit 74 (an example of a display controller) of the terminal 70 controls displaying a text (an example of information) representing this attribute associated with an icon (an example of information) of a check mark that represents a state of being ready for a call; or in the case where the state management unit 75 has determined that the group presence is not "Online", the output control unit 74 controls displaying a text (an example of information) representing this attribute associated with an icon (an example of information) of a bubble or a blank image that represents a not-ready-for-call state (see Step S81 and FIG. 13) (an example of display controlling). In other words, for each attribute with which the state management unit 75 has determined that one of the destination candidates is in a state of being ready to start communication, the output control unit 74 displays information (a text) that represents the attribute in association with information (an icon) that represents one of the destination candidates being in a state of being ready to start communication; and for each attribute with which the state management unit 75 has determined that none of the destination candidates is in a state of being ready to start communication, the output control unit 74 displays information (a text) that represents the attribute in association with information (an icon) that represents none of the destination candidates being in a state of being ready to start communication. In the case of going to start communication with one of destination candidates having a specific attribute among the destination candidates, the user can determine whether it is possible to start a call based on a display of icons of respective attributes. Thereby, it is possible to improve the usability of the terminal 70.

The operation input receiving unit 72 (an example of a receiver) of the terminal 70 receives selection of an attribute on a screen that is display-controlled as illustrated in FIG. 13 (see Step S82). The sending and receiving unit 71 (an example of a transmitter) of the terminal 70 transmits a start request for a call to the terminal 10 having the presence of "Online", which is identified based on the received presence among destination candidates associated with the selected attribute (Steps S84-1 and S84-2). This enables to automatically transmit a start request for a call to a destination candidate ready to start a call depending on the attribute selected by the user. It should be noted that according to the first embodiment, the attributes are respective languages, and the operation input receiving unit 72 of the communication terminal 70x receives a language selected by the user (English in the example illustrated in FIG. 12) of the communication terminal 70x. Then, the communication terminals 70x can start communication with a terminal (destination terminal) 10 in a state of being ready to start communication among destination candidates associated with the language (English) selected by the user, and with the language (English) selected by the user.

In the case where the sending and receiving unit 71 of the terminal 70 has transmitted start requests for a call to multiple terminals 10 having the presence of "Online" as destination candidates, and multiple responses to the start requests are sent to the terminal 70, the terminal 70 establishes communication with a terminal 10 among the destination candidates from which the response was received first (see Step S89). This enables to shorten a waiting time for starting a call. Also, in the case where multiple destination candidates exist, since the destination can be narrowed down by a process between the clients, a load on the service side can be reduced.

The sending and receiving unit 71 (an example of a transmitter) of the terminal 70 transmits information that represents cancellation of the start request to the terminals 10 among the destination candidates that are the transmission sources of the responses other than the transmission source from which the response was received first (see Steps S91-1, 2). The user on the terminal 10 side receiving information that represents cancellation of the start request can grasp that the response to the start request for a call from the terminal 70 became unnecessary.

The operation input receiving unit 12 (an example of a receiver) of the terminal 10 as a destination candidate receives input of one or more attributes of the destination candidate (see Step S13-1) (an example of a reception process). The sending and receiving unit 11 (an example of a transmitter) of the terminal 10 as the destination candidate transmits attribute information that represents the attributes received as input by the operation input receiving unit 12 to the terminal 70 through the management system 50 (Steps S22, S23, and S24) (an example of a transmission process). This enables the terminal 70 to obtain attribute information that represents the attributes of the destination candidates. In the case of receiving multiple start requests of a call transmitted by multiple terminals 70, the sending and receiving unit 11 of the terminal 10 as a destination candidate transmits a response to the start request to the terminal 70 that is the transmission source from which the start request was received first (see Step S87-1). Thereby, the terminal 70 that is not a transmission destination of the response does not need to transmit cancellation information.

### <<Supplementary description of embodiments>>

It should be noted that the terminals 10, 70, and the management system 50 in the above embodiments may be constituted with a single computer, or constituted with multiple computers to which corresponding units (functions or means) are arbitrarily partitioned and assigned. Further, if a program providing system 90 is constituted with a single computer, a program transmitted by the program providing system 90 may be transmitted by partitioning the program into multiple modules, or may be transmitted without partitioning. Furthermore, if the program providing system 90 is constituted with multiple computers, a program may be transmitted from the computers in a state where the program is partitioned into multiple modules.

Further, a recording medium in which a terminal program, a relay apparatus program, and a communication management program of the communication system 1 are stored, and an HD 204 in which the above programs are stored can be provided as program products domestically or overseas.

Furthermore, although in the communication system 1, the IP address of a terminal is managed in the terminal management table illustrated in FIG. 7D, it is not limited to that, but respective FQDNs (Fully Qualified Domain Names) may be managed as long as they are terminal identification information to identify the respective terminals 10 on the communication network 2. In this case, the IP address corresponding to an FQDN is obtained by a known DNS (Domain Name System) server.

In the communication system 1, the "video conference" is used as a term that can be replaced by "TV conference".

Further, although image data and sound data have been described as examples of content data in the above embodiment, it is not limited to that, but may be tactile sensation (touch) data. In this case, sensation of touch by the user on one terminal side is transferred to the other terminal side. Furthermore, content data may be olfactory sensation (smell) data. In this case, sensation of smell on one terminal side is transferred to the other terminal side. Further, content data may be at least one of streaming data items including image data, sound data, tactile sensation data, and olfactory sensation data.

It should be noted that the terminals 10 may be used not only for a call between multiple offices, and a call between different rooms in the same office, but also for a call in the same room, and a call between the outdoors and indoors or between the outdoors and outdoors. If the terminals 10 are used outdoors, wireless communication may be executed through a cellular phone communication network or the like. Further, although a case of a video-conference by the communication system 1 has been described in the above embodiment, it is not limited to that; the communication system may be used for a meeting, an ordinary conversation between family members or friends, or presentation of information in one direction.

It should be noted that a terminal according to the embodiments described above may be implemented with a device memory that stores one or more programs, and one or more processors. The one or more processors run the one or more programs to execute processes described in the embodiments. For example, the device memory and the one or more processors can realize (implement) functions as described in the embodiments. For example, the device memory and the one or more processors may be implemented by hardware elements as described in the embodiments. The one or more programs may be stored in a non-transitory recording medium.

As above, the present invention has been described based on the embodiments. It should be noted that the present invention is not limited to the above embodiments, but various modifications may be made.

### [Citation List]

### [Patent Literature]

[PTL 1] Japanese Patent No. 4649977
[PTL 2] US 2006/120307 A1
[PTL 3] US 2015/148015 A1

### [Reference Signs List]

10, 70 terminal
11, 71 sending, receiving unit
12, 72 operation input receiving unit
13, 73 activation unit
14, 74 output control unit
75 state management unit
19, 79 storing, reading unit
30 relay device
50 management system
51 sending and receiving unit
52 authentication unit
53 management unit
58 session control unit
59 storing and reading unit
1000 storage unit
5000 storage unit
5001 authentication management DB
5002 terminal management DB
7000 storage unit
7001 destination management DB
7002 presence management DB

## Claims

1. A communication terminal (70) comprising:
a sending and receiving unit (71) configured to receive a presence information transmitted from a plurality of destination terminals (10) through a management system (50), each destination terminal (10) representing a destination candidate, the transmitted presence information including attribute information that represents, for each destination candidate, one or more attributes of the destination candidate, and state information that represents, for each of the destination candidates, whether the destination candidate is in a state of being ready to start communication;
a determiner (75) configured, based on the attribute information and the state information received by the sending and receiving unit (71), to determine, for each of the attributes, which destination candidate among the one or more destination candidates associated with the attribute is in the state of being ready to start the communication;
a display controller (74) configured to display, for each of the attributes and based on the determination of the determiner (75), information that represents the attribute in association with information that represents either that at least one of said destination candidates associated with the attribute is in the state of being ready to start the communication or that none of said destination candidates associated with the attribute is in the state of being ready to start the communication; and
an operation input receiving unit (72) configured to receive a selection of an attribute corresponding to displayed information, the attribute being associated with at least one of said destination candidates in the state of being ready to start the communication,
wherein the attribute is an available language or languages, subject of medical treatment or treatments, name of a place or names of places, or type of goods or types of goods, and
wherein the communication terminal (70) transmits a start request for the communication to a plurality of destination terminals (10) corresponding to the destination candidates associated with the selected attribute, determined by the determiner (75) as being in the state of being ready to start the communication, and in a case where a plurality of responses to the start request are transmitted from the plurality of destination terminals (10) to the communication terminal (70), establishes the communication with the destination terminal (10) from which the response was received first.

2. The communication terminal (70) as claimed in claim 1, wherein a transmitter (71) transmits information that represents cancellation of the start request, to the plurality of destination terminals (10) among the destination candidates that are transmission sources of the responses other than the transmission source from which the response was received first.

3. The communication terminal (70) as claimed in claim 1,
wherein each of the attributes represents a language, wherein the operation input receiving unit (72) receives a language selected by a user of the communication terminal (70), and
wherein the communication terminal (70) starts the communication with a destination terminal (10) in the state of being ready to start the communication among the destination candidates associated with the language selected by the user, and with the language selected by the user.

4. A communication system (1) comprising:
the communication terminal (70) as claimed in any one of claims 1 to 3; and
a destination terminal (10) as the destination candidate.

5. The communication system (1) as claimed in claim 4, wherein the destination terminal (10) as the destination candidate includes an operation input receiving unit (12) configured to receive designation of the one or more of attributes of the destination candidate, and
a transmitter (11) configured to transmit to the communication terminal (70), the attribute information that represents the one or more of attributes whose designation has been received by the operation input receiving unit (12).

6. A communication system (1) comprising:
a plurality of communication terminals (70) including the communication terminal (70) as claimed in claim 1; and
a destination terminal (10) as the destination candidate,
wherein the destination terminal (10) as the destination candidate includes a transmitter (11) configured, in a case of receiving a plurality of start requests of communication transmitted by the plurality of communication terminals (70), to transmit a response to the start request to the communication terminal (70) as a transmission source from which the start request was received first.

7. The communication system (1) as claimed in any one of claims 4 to 6, further comprising:
a management system (50) configured to manage the communication between the communication terminal (70) and the destination terminal (10),
wherein the management system (50) controls establishing the communication between the communication terminal (70) and the destination terminal (10) as the destination candidate in response to a request made by the communication terminal (70).

8. A display control method executed by a communication terminal (70), the method comprising:
receiving a presence information transmitted from a plurality of destination terminals (10) through a management system (50), each destination terminal (10) representing a destination candidate, the transmitted presence information including attribute information that represents, for each destination candidate, one or more attributes of the destination candidate, and state information that represents, for each of the destination candidates, whether the destination candidate is in a state of being ready to start communication;
determining, based on the attribute information and the state information received in the receiving step, for each of the attributes, which destination candidate among the one or more destination candidates associated with the attribute is in the state of being ready to start the communication;
displaying, for each of the attributes and based on the determination in the determining step, information that represents the attribute in association with information that represents either that at least one of said destination candidates associated with the attribute is in the state of being ready to start the communication, or that none of said destination candidates associated with the attribute is in the state of being ready to start the communication;
receiving a selection of an attribute corresponding to displayed information, the attribute being associated with at least one of said destination candidates in the state of being ready to start the communication, wherein the attribute is an available language or languages, subject of medical treatment or treatments, name of a place or names of places, or type of goods or types of goods; and
transmitting a start request for the communication to a plurality of destination terminals (10) corresponding to the destination candidates associated with the selected attribute, determined in the determining step as being in the state of being ready to start the communication, and in a case where a plurality of responses to the start request are transmitted from the plurality of destination terminals (10) to the communication terminal (70), establishing the communication with the destination terminal (10) from which the response was received first.

9. The display control method as claimed in claim 8, wherein the destination terminal (10) as the destination candidate executes
a reception process of receiving designation of the one or more of attributes of the destination candidate, and
a transmission process of transmitting attribute information that represents the one or more of attributes whose designation was received in the reception process, to the communication terminal (70).

10. A program causing a communication terminal (70) to execute a process comprising:
receiving a presence information transmitted from a plurality of destination terminals (10) through a management system (50), each destination terminal (10) representing a destination candidate, the transmitted presence information including attribute information that represents, for each destination candidate, one or more attributes of the destination candidate, and state information that represents, for each of the destination candidates, whether the destination candidate is in a state of being ready to start communication;
determining, based on the attribute information and the state information received in the receiving step, for each of the attributes, which destination candidate among the one or more destination candidates associated with the attribute is in the state of being ready to start the communication;
displaying, for each of the attributes and based on the determination in the determining step, information that represents the attribute in association with information that represents either that at least one of said destination candidates associated with the attribute is in the state of being ready to start the communication, or that none of said destination candidates associated with the attribute is in the state of being ready to start the communication;
receiving a selection of an attribute corresponding to displayed information, the attribute being associated with at least one of said destination candidates in the state of being ready to start the communication, wherein the attribute is an available language or languages, subject of medical treatment or treatments, name of a place or names of places, or type of goods or types of goods; and
transmitting a start request for the communication to a plurality of destination terminals (10) corresponding to the destination candidates associated with the selected attribute, determined in the determining step as being in the state of being ready to start the communication , and in a case where a plurality of responses to the start request are transmitted from the plurality of destination terminals (10) to the communication terminal (70), establishing the communication with the destination terminal (10) from which the response was received first.

## Patentansprüche

1. Kommunikationsterminal (70), umfassend:
eine Sende- und Empfangseinheit (71), welche ausgestaltet ist, Anwesenheitsinformation zu empfangen, welche von einer Vielzahl von Zielterminals (10) durch ein Managementsystem (50) übertragen werden, wobei jeder Zielterminal (10) einen Zielkandidaten repräsentiert, wobei die übertragenen Anwesenheitsinformationen Attributinformationen enthalten, welche für jeden Zielkandidaten ein oder mehrere Attribute des Zielkandidaten darstellen, und Zustandsinformationen, welche für jeden Zielkandidaten darstellen, ob der Zielkandidat in einem Zustand startbereit zum Starten einer Kommunikation ist, enthalten;
einen Bestimmer (75), welcher ausgestaltet ist, basierend auf den Attributinformationen und den Zustandsinformationen, welche durch die Sende- und Emfangseinheit (71) erhalten werden, für jedes der Attribute zu bestimmen, welcher Zielkandidat unter den einen oder mehreren Zielkandidaten, welche mit dem Attribut assoziiert sind, in dem Zustand startbereit zum Starten der Kommunikation ist;
eine Anzeigesteuerung (74), welche ausgestaltet ist, für jedes der Attribute und basierend auf der Bestimmung des Bestimmers (75) Informationen anzuzeigen, welche das Attribut in Assoziation mit Informationen darstellt, welche entweder darstellen, dass zumindest einer der Zielkandidaten mit dem Attribut in dem Zustand startbereit zum Starten der Kommunikation ist oder, dass keiner der Zielkandidaten mit dem Attribut assoziiert ist, in dem Zustand startbereit zum Starten der Kommunikation ist; und
eine Betriebseingabeempfangseinheit (72), welche ausgestaltet ist, eine Auswahl eines Attributs zu empfangen, welches angezeigten Informationen entspricht, wobei das Attribut mit zumindest einem der Zielkandidaten in dem Zustand startbereit zum Starten der Kommunikation assoziiert ist,
wobei das Attribut eine verfügbare Sprache oder Sprachen, ein Gegenstand einer medizinischen Behandlung oder Behandlungen, ein Name eines Ortes oder Namen von Orten, oder eine Art von Waren oder Arten von Waren ist, und
wobei der Kommunikationsterminal (70) eine Startanfrage für die Kommunikation an eine Vielzahl von Zielterminals (10) überträgt, welche den Zielkandidaten, welche mit dem ausgewählten Attribut assoziiert sind, entsprechen, welche durch den Bestimmer (75) als in dem Zustand startbereit zum Starten der Kommunikation befindlich bestimmt sind, und in einem Fall, wo eine Vielzahl von Antworten auf die Startanfrage von der Vielzahl von Zielterminals (10) an den Kommunikationsterminal (70) übertragen werden, die Kommunikation mit dem Zielterminal (10) herstellt, von dem die Antwort zuerst erhalten wurde.

2. Kommunikationsterminal (70) nach Anspruch 1, wobei ein Transmitter (71) Informationen, welche eine Löschung der Startanfrage darstellen, an die Vielzahl von Zielterminals (10) unter den Zielkandidaten, welche Übertragungsquellen der Antworten sind, außer der Übertragungsquelle, von welcher die Antwort zuerst empfangen wurde, überträgt.

3. Kommunikationsterminal (70) nach Anspruch 1, wobei jedes der Attribute eine Sprache darstellt, wobei die Betriebseingabeempfangseinheit (72) eine Sprache empfängt, welche von einem Benutzer des Kommunikationsterminals (70) ausgewählt ist, und
wobei der Kommunikationsterminal (70) die Kommunikation mit einem Zielterminal (10) in dem Zustand startbereit zum Starten der Kommunikation unter den Zielkandidaten, welche mit der Sprache, die von dem Benutzer ausgewählt ist, assoziiert sind, und mit der Sprache, welche von dem Benutzer ausgewählt ist, startet.

4. Kommunikationssystem (1), umfassend:
den Kommunikationsterminal (70) nach einem der Ansprüche 1 bis 3; und
einen Zielterminal (10) als den Zielkandidaten.

5. Kommunikationssystem (1) nach Anspruch 4, wobei der Zielterminal (10) als Zielkandidat enthält
eine Betriebseingabeempfangseinheit (12), welche ausgestaltet ist, Bezeichnung der einen oder mehreren Attribute des Zielkandidaten zu empfangen, und
einen Transmitter (11), welcher ausgestaltet ist die Attributinformationen, welche die einen oder mehreren der Attribute darstellen, dessen Bezeichnung durch die Betriebseingabeempfangseinheit (12) empfangen worden ist, an den Kommunikationsterminal (70) zu übertragen.

6. Kommunikationssystem (1) umfassend:
eine Vielzahl von Kommunikationsterminals (70), welche den Kommunikationsterminal (70) nach Anspruch 1 enthalten; und
einen Zielterminal (10) als Zielkandidaten,
wobei der Zielterminal (10) als Zielkandidat einen Transmitter (11) enthält, welcher ausgestaltet ist, in einem Fall des Empfangens einer Vielzahl von Startanfragen der Kommunikation, welche durch die Vielzahl von Kommunikationsterminals (70) empfangen werden, eine Antwort auf die Startanfrage an den Kommunikationsterminal (70) als eine Übertragungsquelle zu übertragen, von dem die Startanfrage zuerst empfangen wurde.

7. Kommunikationssystem (1) nach einem der Ansprüche 4 bis 6, ferner umfassend:
ein Managementsystem (50), welches ausgestaltet ist, die Kommunikation zwischen dem Kommunikationsterminal (70) und dem Zielterminal (10) zu verwalten,
wobei das Managementsystem (50) das Herstellen der Kommunikation zwischen dem Kommunikationsterminal (70) und dem Zielterminal (10) als den Zielkandidaten in Antwort auf die Anfrage, welche durch den Kommunikationsterminal (70) gemacht wird, steuert.

8. Anzeigesteuerungsverfahren, das von einem Kommunikationsterminal (70) ausgeführt wird, wobei das Verfahren umfasst:
Empfangen von Anwesenheitsinformationen, welche von einer Vielzahl von Zielterminals (10) durch ein Managementsystem (50) übertragen werden, wobei jeder Zielterminal (10) einen Zielkandidaten darstellt, wobei die übertragenen Anwesenheitsinformationen Attributinformationen, welche für jeden Zielkandidaten ein oder mehrere Attribute des Zielkandidaten darstellen, und Zustandsinformationen, welche für jeden der Zielkandidaten darstellen, ob der Zielkandidat in einem Zustand startbereit zum Starten der Kommunikation ist, enthalten;
Bestimmen basierend auf den Attributinformationen und den Zustandsinformationen, welche in dem Empfangsschritt empfangen werden, für jedes der Attribute, welcher Zielkandidat unter den einen oder mehreren Zielkandidaten, welche mit dem Attribut assoziiert sind, in dem Zustand startbereit zum Starten der Kommunikation ist;
Anzeigen von Informationen für jedes der Attribute und basierend auf dem Bestimmen in dem Bestimmungsschritt, welche das Attribut in Assoziation mit Informationen darstellen, welche entweder darstellen, dass zumindest einer der Zielkandidaten, welche mit dem Attribut assoziiert sind, in dem Zustand startbereit zum Starten der Kommunikation ist, oder dass keiner der Zielkandidaten, welche mit dem Attribut assoziiert sind, in dem Zustand startbereit zum Starten der Kommunikation ist;
Empfangen einer Auswahl eines Attributs, welches angezeigten Informationen entspricht, wobei das Attribut mit zumindest einem der Zielkandidaten in dem Zustand startbereit zum Starten der Kommunikation assoziiert ist, wobei das Attribut eine verfügbare Sprache oder Sprachen, ein Gegenstand einer medizinischen Behandlung oder Behandlungen, ein Name eines Ortes oder Namen von Orten, oder eine Art von Waren oder Arten von Waren ist; und
Übertragen einer Startanfrage für die Kommunikation an eine Vielzahl von Zielterminals (10), welche den Zielkandidaten entsprechen, welche mit dem ausgewählten Attribut assoziiert sind, welche in dem Bestimmungsschritt als in dem Zustand startbereit zum Starten der Kommunikation bestimmt werden, und in einem Fall wo eine Vielzahl von Antworten auf die Startanfrage von der Vielzahl von Zielterminals (10) zu dem Kommunikationsterminal (70) übertragen werden, Herstellen der Kommunikation mit dem Zielterminal (10) von welchem die Antwort zuerst empfangen wurde.

9. Anzeigesteuerungsverfahren nach Anspruch 8, wobei der Zielterminal (10) als Zielkandidat ausführt
einen Empfangsprozess des Empfangens einer Bezeichnung des einen oder mehreren der Attribute des Zielkandidaten, und
einen Übertragungsprozess des Übertragens von Attributinformationen, welche das eine oder mehrere Attribute darstellen, dessen Bezeichnung in dem Empfangsprozess empfangen worden ist, an den Kommunikationsterminal (70).

10. Programm, welches einen Kommunikationsterminal (70) veranlasst, ein Verfahren auszuführen, welches umfasst:
Empfangen von Anwesenheitsinformationen, welche von einer Vielzahl von Zielterminals (10) durch ein Managementsystem (50) übertragen werden, wobei jeder Zielterminal (10) einen Zielkandidaten darstellt, wobei die übertragenen Anwesenheitsinformationen Attributinformationen, welche für jeden Zielkandidaten ein oder mehrere Attribute des Zielkandidaten darstellen, und Zustandsinformationen, welche für jeden der Zielkandidaten darstellen, ob der Zielkandidat in einem Zustand startbereit zum Starten einer Kommunikation ist, enthalten;
Bestimmen basierend auf den Attributinformationen und den Zustandsinformationen, welche in dem Empfangsschritt empfangen werden, für jedes der Attribute, welcher Zielkandidat unter den einen oder mehreren Zielkandidaten, welche mit dem Attribut assoziiert sind, in dem Zustand startbereit zum Starten der Kommunikation ist;
Anzeigen von Informationen für jedes der Attribute und basierend auf dem Bestimmen in dem Bestimmungsschritt, welche das Attribut in Assoziation mit Informationen darstellen, welche entweder darstellen, dass zumindest einer der Zielkandidaten, welche mit dem Attribut assoziiert sind, in dem Zustand startbereit zum Starten der Kommunikation ist, oder dass keiner der Zielkandidaten, welche mit dem Attribut assoziiert sind, in dem Zustand startbereit zum Starten der Kommunikation ist;
Empfangen einer Auswahl eines Attributs, welches angezeigten Informationen entspricht, wobei das Attribut mit zumindest einem der Zielkandidaten in dem Zustand startbereit zum Starten der Kommunikation assoziiert ist, wobei das Attribut eine verfügbare Sprache oder Sprachen, ein Gegenstand einer medizinischen Behandlung oder Behandlungen, ein Name eines Ortes oder Namen von Orten, oder eine Art von Waren oder Arten von Waren ist; und
Übertragen einer Startanfrage für die Kommunikation an eine Vielzahl von Zielterminals (10), welche den Zielkandidaten entsprechen, welche mit dem ausgewählten Attribut assoziiert sind, welche in dem Bestimmungsschritt als in dem Zustand startbereit zum Starten der Kommunikation bestimmt werden, und in einem Fall wo eine Vielzahl von Antworten auf die Startanfrage von der Vielzahl von Zielterminals (10) zu dem Kommunikationsterminal (70) übertragen werden, Herstellen der Kommunikation mit dem Zielterminal (10) von welchem die Antwort zuerst empfangen wurde.

## Revendications

1. Terminal de communication (70), comprenant :
une unité d'envoi et de réception (71) configurée pour recevoir des informations de présence transmises à partir d'une pluralité de terminaux de destination (10) par l'intermédiaire d'un système de gestion (50), chaque terminal de destination (10) représentant un candidat de destination, les informations de présence transmises incluant des informations d'attribut qui représentent, pour chaque candidat de destination, un ou plusieurs attributs du candidat de destination, et des informations d'état qui représentent, pour chacun des candidats de destination, le fait que le candidat de destination est, ou n'est pas, dans un état prêt de commencer une communication ;
un dispositif de détermination (75) configuré, sur la base des informations d'attribut et des informations d'état reçues par l'unité d'envoi et de réception (71), pour déterminer, pour chacun des attributs, le candidat de destination, parmi les un ou plusieurs candidats de destination associés à l'attribut, qui est dans l'état prêt de commencer la communication ;
un dispositif de commande d'affichage (74) configuré pour afficher, pour chacun des attributs et sur la base de la détermination du dispositif de détermination (75), des informations qui représentent l'attribut en association avec des informations qui représentent soit qu'au moins un desdits candidats de destination associés à l'attribut est dans l'état prêt de commencer la communication, soit qu'aucun desdits candidats de destination associés à l'attribut n'est dans l'état prêt de commencer la communication ; et
une unité de réception d'entrée d'opération (72) configurée pour recevoir une sélection d'un attribut correspondant à des informations affichées, l'attribut étant associé à au moins un desdits candidats de destination dans l'état prêt de commencer la communication,
dans lequel l'attribut est une langue disponible ou des langues disponibles, un sujet de traitement médical ou de traitements médicaux, un nom d'un emplacement ou des noms d'emplacements, ou un type d'articles ou des types d'articles, et
dans lequel le terminal de communication (70) transmet une demande de commencement de la communication à une pluralité de terminaux de destination (10) correspondant aux candidats de destination associés à l'attribut sélectionné, déterminés par le dispositif de détermination (75) comme étant dans l'état prêt de commencer la communication, et, au cas où une pluralité de réponses à la demande de commencement sont transmises depuis la pluralité de terminaux de destination (10) au terminal de communication (70), établit la communication avec le terminal de destination (10) à partir duquel la réponse a été reçue en premier.

2. Terminal de communication (70) selon la revendication 1, dans lequel un transmetteur (71) transmet des informations qui représentent une annulation de la demande de commencement, à la pluralité de terminaux de destination (10) parmi les candidats de destination qui sont des sources de transmission des réponses autres que la source de transmission à partir de laquelle la réponse a été reçue en premier.

3. Terminal de communication (70) selon la revendication 1,
dans lequel chacun des attributs représentent une langue,
dans lequel l'unité de réception d'entrée d'opération (72) reçoit une langue sélectionnée par un utilisateur du terminal de communication (70), et
dans lequel le terminal de communication (70) commence la communication avec un terminal de destination (10) dans l'état prêt de commencer la communication parmi les candidats de destination associés à la langue sélectionnée par l'utilisateur, et avec la langue sélectionnée par l'utilisateur.

4. Système de communication (1) comprenant :
le terminal de communication (70) selon l'une quelconque des revendications 1 à 3 ; et
un terminal de destination (10) en tant que candidat de destination.

5. Système de communication (1) selon la revendication 4, dans lequel le terminal de destination (10) en tant que candidat de destination inclut une unité de réception d'entrée d'opération (12) configurée pour recevoir une désignation des un ou plusieurs d'attributs du candidat de destination, et
un transmetteur (11) configuré pour transmettre, au terminal de communication (70), les informations d'attribut qui représentent les un ou plusieurs d'attributs dont la désignation a été reçue par l'unité de réception d'entrée d'opération (12).

6. Système de communication (1), comprenant :
une pluralité de terminaux de communication (70) incluant le terminal de communication (70) selon la revendication 1 ; et
un terminal de destination (10) en tant que candidat de destination,
dans lequel le terminal de destination (10) en tant que candidat de destination inclut un transmetteur (11) configuré, dans un cas de la réception d'une pluralité de demandes de commencement de communication transmises par la pluralité de terminaux de communication (70), pour transmettre une réponse à la demande de commencement au terminal de communication (70) en tant que source de transmission à partir de laquelle la demande de commencement a été reçue en premier.

7. Système de communication (1) selon l'une quelconque des revendications 4 à 6, comprenant en outre :
un système de gestion (50) configuré pour gérer la communication entre le terminal de communication (70) et le terminal de destination (10), dans lequel le système de gestion (50) commande l'établissement de la communication entre le terminal de communication (70) et le terminal de destination (10) en tant que candidat de destination en réponse à une demande faite par le terminal de communication (70).

8. Procédé de commande d'affichage exécuté par un terminal de communication (70), le procédé comprenant :
la réception d'informations de présence transmises à partir d'une pluralité de terminaux de destination (10) par l'intermédiaire d'un système de gestion (50), chaque terminal de destination (10) représentant un candidat de destination, les informations de présence transmises incluant des informations d'attribut qui représentent, pour chaque candidat de destination, un ou plusieurs attributs du candidat de destination, et des informations d'état qui représentent, pour chacun des candidats de destination, le fait que le candidat de destination est, ou n'est pas, dans un état prêt de commencer une communication ;
la détermination, sur la base des informations d'attribut et des informations d'état reçues dans l'étape de la réception, pour chacun des attributs, le candidat de destination, parmi les un ou plusieurs candidats de destination associés à l'attribut, qui est dans l'état prêt de commencer la communication ;
l'affichage, pour chacun des attributs et sur la base de la détermination dans l'étape de la détermination, d'informations qui représentent l'attribut en association avec des informations qui représentent soit qu'au moins un desdits candidats de destination associés à l'attribut est dans l'état prêt de commencer la communication, soit qu'aucun desdits candidats de destination associés à l'attribut n'est dans l'état prêt de commencer la communication ;
la réception d'une sélection d'un attribut correspondant à des informations affichées, l'attribut étant associé à au moins un desdits candidats de destination dans l'état prêt de commencer la communication, dans lequel l'attribut est une langue disponible ou des langues disponibles, un sujet de traitement médical ou de traitements médicaux, un nom d'un emplacement ou des noms d'emplacements, ou un type d'articles ou des types d'articles ; et
la transmission d'une demande de commencement de la communication à une pluralité de terminaux de destination (10) correspondant aux candidats de destination associés à l'attribut sélectionné, déterminés dans l'étape de la détermination comme étant dans l'état prêt de commencer la communication, et, au cas où une pluralité de réponses à la demande de commencement sont transmises depuis la pluralité de terminaux de destination (10) au terminal de communication (70), l'établissement de la communication avec le terminal de destination (10) à partir duquel la réponse a été reçue en premier.

9. Procédé de commande d'affichage selon la revendication 8, dans lequel le terminal de destination (10) en tant que candidat de destination exécute
un processus de réception, de la réception de désignation des un ou plusieurs d'attributs du candidat de destination, et
un processus de transmission, de la transmission d'informations d'attribut, qui représentent les un ou plusieurs d'attributs dont la désignation a été reçue dans le processus de réception, au terminal de communication (70).

10. Programme faisant en sorte qu'un terminal de communication (70) exécute un processus comprenant :
la réception d'informations de présence transmises à partir d'une pluralité de terminaux de destination (10) par l'intermédiaire d'un système de gestion (50), chaque terminal de destination (10) représentant un candidat de destination, les informations de présence transmises incluant des informations d'attribut qui représentent, pour chaque candidat de destination, un ou plusieurs attributs du candidat de destination, et des informations d'état qui représentent, pour chacun des candidats de destination, le fait que le candidat de destination est, ou n'est pas, dans un état prêt de commencer une communication ;
la détermination, sur la base des informations d'attribut et des informations d'état reçues dans l'étape de la réception, pour chacun des attributs, du candidat de destination, parmi les un ou plusieurs candidats de destination associés à l'attribut, qui est dans l'état prêt de commencer la communication ;
l'affichage, pour chacun des attributs et sur la base de la détermination dans l'étape de la détermination, d'informations qui représentent l'attribut en association avec des informations qui représentent soit qu'au moins un desdits candidats de destination associés à l'attribut est dans l'état prêt de commencer la communication, soit qu'aucun desdits candidats de destination associés à l'attribut n'est dans l'état prêt de commencer la communication ;
la réception d'une sélection d'un attribut correspondant à des informations affichée, l'attribut étant associé à au moins un desdits candidats de destination dans l'état prêt de commencer la communication, dans lequel l'attribut est une langue disponible ou des langues disponibles, un sujet de traitement médical ou de traitements médicaux, un nom d'un emplacement ou des noms d'emplacements, ou un type d'articles ou des types d'articles ; et
la transmission d'une demande de commencement de la communication à une pluralité de terminaux de destination (10) correspondant aux candidats de destination associés à l'attribut sélectionné, déterminés dans l'étape de la détermination comme étant dans l'état prêt de commencer la communication, et, au cas où une pluralité de réponses à la demande de commencement sont transmises depuis la pluralité de terminaux de destination (10) au terminal de communication (70), l'établissement de la communication avec le terminal de destination (10) à partir duquel la réponse a été reçue en premier.
